# EUROPEAN PATENT SPECIFICATION

(11) **EP 4 248 384 B1**
(45) Date of publication and mention of the grant of the patent: **15.04.2026**
(21) Application number: 21830788.2
(22) Date of filing: 16.12.2021
(51) Int. Cl.: G01N 30/88, G06Q 10/0633, G06F 3/0481

(54) **METHODS, MEDIUMS, AND SYSTEMS FOR BUILDING AND EXECUTING A CHROMATOGRAPHY WORKFLOW**
VERFAHREN, MEDIEN UND SYSTEME ZUM AUFBAU UND ZUR AUSFÜHRUNG EINES CHROMATOGRAFIEARBEITSABLAUFS
PROCÉDÉS, SUPPORTS ET SYSTÈMES POUR GÉNÉRER ET EXÉCUTER UN FLUX DE TRAVAIL DE CHROMATOGRAPHIE

(30) Priority: 18.12.2020 US 202063127609 P
(43) Date of publication of application: 27.09.2023
(73) Proprietor: Waters Technologies Ireland Limited, 2 Dublin (IE)
(72) Inventor: JENSEN, Chris, Coventry, Connecticut 06238 (US); COHN, Steven M., Franklin, Massachusetts 02038 (US)
(74) Representative: Forresters IP LLP
(86) International application number: PCT/IB2021/061866
(87) International publication number: WO 2022/130284

(56) References cited:
- WO-A1-2021/214728
- US-A1- 2020 158 697
- US-B1- 9 424 398

## Description

### CROSS-REFERENCE TO RELATED APPLICATIONS

This application claims the benefit of U.S. Provisional Patent Application No. 63/127,609, filed December 18, 2020.

### BACKGROUND

Chromatography refers to the separation of a mixture by passing it in solution, suspension, or as a vapor through a medium in which the components of the mixture move at different rates. The components may then be analyzed to identify the existence, amount, concentration, or other properties of the components. Chromatography includes a number of different techniques, such as mass spectrometry (MS), liquid chromatography mass spectrometry (LCMS), and many others.

A prior art arrangement is known from US2020/158697A1 which relates to an apparatus and method for generating an analysis method to be performed by an analytical device.

### BRIEF SUMMARY

The present disclosure provides a method, a non-transitory computer readable storage medium, and a computing apparatus according, respectively, to claims 1, 8, and 12.

Exemplary embodiments relate to techniques for building and controlling workflows used to analyze data from chromatography experiments. Exemplary embodiments may take the form of a computer-implemented method, instructions stored on a non-transitory computer-readable medium, a computing apparatus, etc. Unless otherwise noted, it is contemplated that the embodiments described may be used individually in order to achieve the individual advantages noted below or may be applied together in any combination to achieve synergistic results.

According to a first embodiment, a system may receive an instruction to generate a workflow for analyzing results of a chromatography experiment. The workflow may include multiple ordered steps, where a step includes calculations that operate on either raw data from the experiment (or lightly processed data, such as data that has been processed to meet initial requirements of the workflow), or processed data produced by a previous step. Each step may perform a set of calculations associated with a common chromatography analysis task, based on settings for the step, and generate an output. Steps may be segregated based on the chromatography task being performed and may generate only enough data to perform that task. Subsequent steps that perform different tasks may rely on the output from previous steps.

The step may provide visualizations of the output of the step; for instance, an "Integration" step that takes raw mass spectral readings from a chromatography experiment and identifies peaks in the data may output a peak list that can be overlaid onto a graph of the mass spectral readings. The Integration step might generate a visualization of the raw mass spectral data with the peaks identified and/or with peak data overlaid. The "Integration" step is but one example of a step usually performed in the analysis of chromatography data. Other examples of steps include a check acquisition step, a check inputs step, an identify components step, a calibration step, a system suitability step, and a review results step, among others. One of ordinary skill in the art will understand what each step commonly performed in chromatography analysis typically entails, and what other steps not enumerated above may be included on a case-by-case basis.

In some embodiments, several chromatography steps may be combined together into a single "step" data structure in the workflow, particularly when the two chromatography steps are performed by the same analyst or reviewer.

Each step may be associated with one or more pages, where each page may represent a variation on the step. The page may provide a configuration for the step, which different pages providing different ways of performing the step and/or visualization the output data from the step. For example, a first page associated with the "Integrate" step might show a peak table on the data visualization, whereas a second page might hide the peak table. Users can choose from among available pages to configure the way that the step is performed or presented.

The system may present a user interface that displays the steps available to be included in (or already included in) the workflow. The system may receive, via the user interface, a selection of a step to be edited. In response to receiving the selection, the system may present a user interface that displays the available pages for the selected step, and any configuration options available for the page. The system may receive, via the user interface, a selection of a page and/or configuration options for the page and may associate the configured page with the step in the workflow.

The system may, automatically or in response to a user selection, insert a transition into the workflow. The transition may represent a change in data custody from a current step to a next step. For example, the current step may be configured to be performed by a first user, and the next step may be configured to be performed by a second user different from the first user.

There may be a step boundary between each of the stages. Some of the step boundaries may be ungated, in that they do not require a user to confirm that they wish to move from one stage to the next. Others may be gated, in that they do require such confirmation, or something more such as credentials or a reason for moving between stages. There may be transitions at only some of the step boundaries, or at each of the step boundaries.

In this embodiment, a transition marks a separation between a step or steps in one part of the workflow and a step or steps in another part of the workflow. Transitions allow a consuming application (e.g., an analysis program that implements the workflow) to keep track of which step(s) the user is currently viewing/implementing. It also allows the program to look forward/backward to the next/previous transitions, so that the application can efficiently select the steps to be displayed in a navigation panel for the workflow. In some embodiments, the application implementing the workflow could request only a limited number of steps from the workflow builder based on the transitions in the workflow (e.g., only the steps between the previous transition and the next transition, or a limited number of steps before the previous transition/after the next transition). If the application requests all the steps in a workflow (without considering the transitions and where the user currently is in the workflow), the application must keep track of where the analysis is taking place within the workflow, which can complicate the application's parsing logic.

Transitions allows the application to keep track of the users responsible for each step and simplifies the collection of signatures when moving between steps controlled by different users for an audit trail. It also segregates steps belonging to different users, allowing for simplified access control so that users cannot access steps that they are not authorized to perform.

According to a second embodiment, the steps may be defined by a data structure, and the transition is defined by the same data structure to be a particular kind of step. In other words, the transition may be simply a special case of a step. This improvement serves to flatten the data model (e.g., fewer data structures are required, because the workflow can be represented as simply a series of steps, rather than steps and separate transitions). Consequently, the workflow builder does not need to make assumptions about how the workflow will be visualized on a particular system; this makes the workflow more generic and allows for easy extensibility to different applications. This also allows for a cleaner implementation that makes transitions easier to understand (both by end users who are building workflows, and by the engineers responsible for the workflow builder program). As a result, it is easier to maintain the workflow builder code.

According to a third embodiment, the steps may be are organized into one or more sequences, and each sequence may be configured with a transition to a next sequence in the workflow, to a previous sequence of the workflow, or to an end of the workflow. This represents an alternative organization to the second embodiment, in that transitions are not separate elements (steps) in the workflow, but rather are defined as part of a sequence. Transitions remain customizable and extensible, as in the second embodiment. This embodiment also allows the workflow to be queried flexibly: for instance, a user can request a complete workflow, or a specific sequence within the workflow. It also allows logic to be built into the workflow itself that can simplify logic built into applications that visualize or execute the workflow; for example, a sequence could be coded as a "review" sequence, which may simplify tracking logic built into the application that determines whether a transition from one sequence to another is permitted. However, as compared to the second embodiment, any actions associated with the transition (e.g., a signoff from one sequence to another) may need to be kept relatively simple, since the design of the transition needs to accommodate an entire sequence of steps.

According to a fourth embodiment, a workflow builder may identify a predefined ordering for a subset of the plurality of steps, and may enforce the predefined ordering when generating the workflow. Certain steps may need to be performed in a specified order because the results of one step may be needed in order to accurately perform a subsequent step. One example in chromatography data analysis is the series of steps including the "integrate," "identify," "calibrate," and "review" steps. Although other steps may be inserted between these steps, mass spectra need to be integrated in order to determine where the peaks are in the data before the system can identify mixture components associated with those peaks. After the mixture components are identified, calibration components within the mixture components can be identified. After the data is calibrated based on the calibration components, the final results of the experiment can be reviewed. It would not be appropriate to perform these steps in a different order, and so the workflow builder may enforce this ordering when the user designs a workflow. Other examples of predefined step orderings will be apparent to those of ordinary skill in the art. Particularly when the workflow is complex, with other steps and/or transitions inserted between the ordered steps, or with multiple different orderings that need to be applied to different subsets of steps, it may be difficult for the user to identify which steps need to be performed before others. Consequently, a user may inadvertently build a workflow with an improper step ordering. By enforcing predefined orderings, this problem can be avoided.

According to a fifth embodiment, the workflow may be executed. As part of execution, a first user who performed the current step may be identified. The first user may be logged in an audit log. Upon arriving at a transition, the system may identify a second user responsible for performing the second step. The system may hand off control of the workflow from the first user to the second user, and may log the second user in the audit log. This embodiment allows transitions to be leveraged for access control. Especially in compliance-driven workflows, it may be important to ensure that each step is performed by an appropriately authorized user, and that compliance with this requirement is recorded in a log that can be used to generate an audit trail. The transitions of the exemplary embodiments provide an efficient point at which to enforce these restrictions and record information for audit purposes.

According to a sixth embodiment based on the fifth embodiment, the first user and the second user may each be associated with user profiles. In this case, identifying the second user may be performed by identifying, in the profile associated with the second user, that the second user has access rights for the second step. This embodiment makes it more efficient to perform the transition from the first user to the second user, since the application performing the workflow can consult the user profiles to determine if the user that is attempting to access the post-transition steps is permitted to do so. Moreover, responsibility for the different steps can be implemented by assigning certain steps to the user in the profile.

According to a seventh embodiment, a first subset of the plurality of steps may be associated with a processing template, and a second subset of the plurality of steps may be associated with a review template. A chromatography experiment often includes processing steps, where data is generated and visualized, and a set of review steps that allow the generated/visualized data to be evaluated by a review. Since the processing and review steps are typically performed by different users, it is more efficient to separate these different types of steps into different templates. The review template may provide customizable pages of visualizations that allow an analyst to better perform the analysis processing steps, and the review template may provide actions to be taken by a reviewer. The division between the templates also provides a convenient location for a transition, as the workflow pivots from a data analysis team to a review team.

According to an eighth embodiment, at least one of the pages may be associated with a visualization element configured to display data associated with a step corresponding to the page on a user interface. The system may receive a configuration for the visualization element that controls how the visualization element displays the data. Examples of configurations for the visualization elements include where to place graphs/charts, which colors to use, whether to show calibration data, when to apply flags if data exceeds certain thresholds, etc. By providing an efficient way to represent data (via the configurable visualization elements) defined by a given page, the workflow can be built more efficiently than if each of the visualization elements had to be coded for each page. Each page can provide different arrangements and configurations of the visualization elements. This provides a quick and efficient way to set up a workflow in a way that allows a data analyst to be provided with the information that they prefer in order to perform their analysis in an efficient way.

According to a ninth embodiment based on the eighth embodiment, receiving the configuration may involve identifying a plurality of predefined display formats associated with the page, and receiving a selection of one of the predefined display formats. The predefined display formats make it even more efficient to define the visualizations in precisely the way that the analyst requires or prefers.

According to a tenth embodiment, the workflow may be executed. Executing the workflow may involve receiving, at a first step of the plurality of steps, a stream of raw data acquired during the chromatography experiment, the stream of raw data stored in a raw data store. Metadata may be generated at the first step based on processing the raw data. The metadata may be stored in a metadata catalog distinct from the stream of raw data, the metadata catalog stored in a document store distinct from the raw data store. Segregating the raw data stream from the metadata catalog allows the raw data catalog to be locked down (e.g., set to "read only") for auditing purposes. Similarly, the data generated at each step can be audited separately. If a step is re-run and subsequent data is generated, it is possible to determine what was changed between the first run of a step and a subsequent run. In this way, a reviewer can determine if the purpose of a change was to make certain parts of the data fit a user's preconceived notions, rather than implementing experimental best practices.

Furthermore, keeping the raw data stream and metadata catalog separate allow them to be stored in separate locations that are optimized for reading and querying of these two different types of data. For example, because the raw data is stored in a stream, it can be best read by a system optimized to efficiently read static stream-able objects, such as the Simple Storage Service (S3) from Amazon Web Services (AWS). On the other hand, the metadata catalog is typically not a data stream, and therefore may be better stored in, and read from, a database system.

According to an eleventh embodiment, the workflow may be executed. Executing the workflow may involve receiving an instruction to move from one of the plurality of steps to another of the plurality of steps in the workflow and logging the movement in an audit log. In general, a workflow is configured to be executed in a sequential order and intentionally provides a limited amount of data to a user that is needed in order to perform the current step. Thus, some types of movement, such as when a user moves forward to a step, obtains information from that step, and then moves backwards to execute a previous step, may be problematic and should be included in the audit log.

One such example is captured in twelfth and thirteenth embodiments. In both embodiments, the another of the plurality of steps precedes the one of the plurality of steps in the workflow. In the twelfth embodiment, the system may prompt a user who initiated the movement to enter a reason for returning to the another one of the plurality of steps and log the reason in the audit log. In the thirteenth embodiment, the user makes a change to a setting at the another one of the plurality of steps. The system may prompt the user who initiated the movement to enter a reason for changing the setting and logging the reason in the audit log. Both of these embodiments capture actions in the audit log that may be particularly problematic ways for a user to interact with a workflow. By capturing the reason for moving between steps and/or the settings that the user changed, a reviewer can better judge the propriety of the user's interactions with the workflow.

In any of the embodiments that capture information in the audit log, the audit log may be displayed on a user interface at the request of a reviewing user. The audit log may be interactable; for example, a user might select an action that is captured in the audit log to be taken to the step of the workflow in which the action occurred. The reviewer may be presented, in the user interface, with the visualizations that were available at that step and any configuration options available (both the original configuration options and any options that the user changed during the performance of the step).

These embodiments will be described in detail below with reference to the accompanying Figures.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example of a mass spectrometry system according to an exemplary embodiment.
FIG. 2 illustrates an example of a workflow in accordance with one embodiment.
FIG. 3 depicts an exemplary interface for a workflow builder, including workflow steps, transitions, and visualizations associated with each step, according to an exemplary embodiment.
FIG. 4 illustrates an exemplary workflow template in accordance with one embodiment.
FIG. 5A depicts an example of an organizational structure for a workflow according to one embodiment.
FIG. 5B depicts another example of an organizational structure for a workflow according to one embodiment.
FIG. 5C depicts another example of an organizational structure for a workflow according to one embodiment.
FIG. 6 depicts an exemplary workflow management environment in accordance with one embodiment.
FIG. 7A is a flowchart depicting exemplary logic for creating a workflow suitable for use with an exemplary embodiment.
FIG. 7B is a flowchart depicting exemplary logic for executing a workflow in accordance with one embodiment.
FIG. 8 depicts an illustrative computer system architecture that may be used to practice exemplary embodiments described herein.

### DETAILED DESCRIPTION

The process of analyzing chromatography results may take place in several steps. According to the techniques described herein, all the steps of a given chromatography analysis may be organized into a workflow, separated by gates and/or transitions. The transitions may represent locations in the workflow where responsibility or stewardship of the data in the workflow passes from one user to a different user. The steps may be represented as pages, with at least some of the steps represented by multiple different pages representing different customization options for visualizations, a configuration of the step, etc.

By selecting pages for the various steps and connecting at least some of the steps with transitions, a user can build a workflow very quickly and efficiently. The resulting workflow supports auditing by logging information at various stages. Furthermore, the workflow enforces access rights at the transitions, ensuring that only authorized users perform the requisite steps. It also improves the ability of an application responsible for executing the workflow to visualize the workflow - because the application knows that a given user with be responsible for the steps between two transitions, the application only needs to request the workflow steps and data between the two transitions when the user responsible for those steps is interacting with the transitions. Subsequent workflow steps do not need to be retrieved until the next user receives a handoff of the workflow. In some cases, a limited number of steps outside the transitions may be retrieved so that they can be rendered in a navigation element. In this way, the current user may be informed of what processing steps are coming next, and who might be responsible for performing them.

These and other features will be described in more detail below with reference to the accompanying figures.

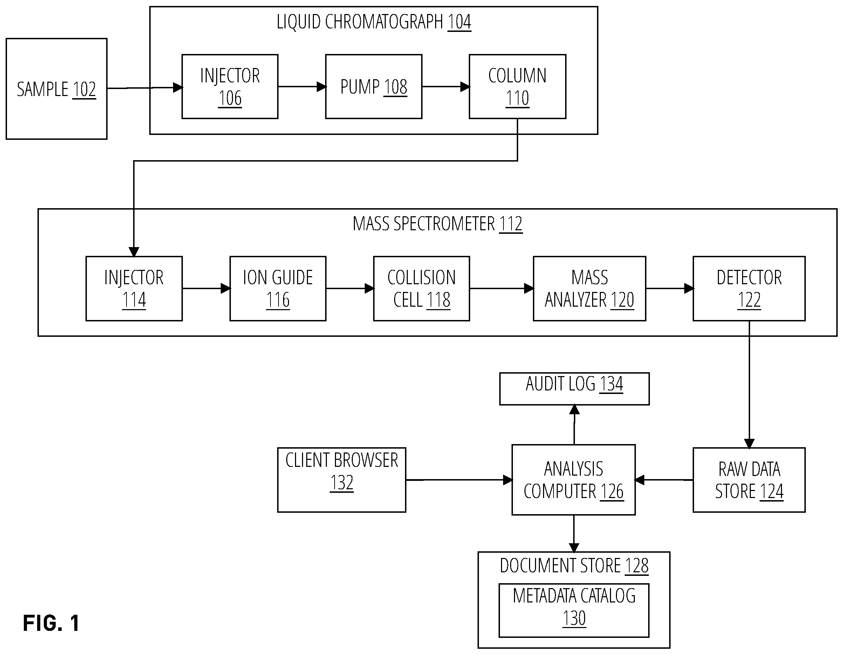

For purposes of illustration, FIG. 1 is a schematic diagram of a system that may be used in connection with techniques herein. Although FIG. 1 depicts particular types of devices in a specific LCMS configuration, one of ordinary skill in the art will understand that different types of chromatographic devices (e.g., MS, tandem MS, etc.) may also be used in connection with the present disclosure.

A sample 102 is injected into a liquid chromatograph 104 through an injector 106. A pump 108 pumps the sample through a column 110 to separate the mixture into component parts according to retention time through the column.

The output from the column is input to a mass spectrometer 112 for analysis. Initially, the sample is desolved and ionized by a desolvation/ionization device 114. Desolvation can be any technique for desolvation, including, for example, a heater, a gas, a heater in combination with a gas or other desolvation technique. Ionization can be by any ionization techniques, including for example, electrospray ionization (ESI), atmospheric pressure chemical ionization (APCI), matrix assisted laser desorption (MALDI) or other ionization technique. Ions resulting from the ionization are fed to a collision cell 118 by a voltage gradient being applied to an ion guide 116. Collision cell 118 can be used to pass the ions (low-energy) or to fragment the ions (high-energy).

Different techniques (including one described in U.S. Pat. No. 6,717,130, to Bateman et al.) may be used in which an alternating voltage can be applied across the collision cell 118 to cause fragmentation. Spectra are collected for the precursors at low-energy (no collisions) and fragments at high-energy (results of collisions).

The output of collision cell 118 is input to a mass analyzer 120. Mass analyzer 120 can be any mass analyzer, including quadrupole, time-of-flight (TOF), ion trap, magnetic sector mass analyzers as well as combinations thereof. A detector 122 detects ions emanating from mass analyzer 122. Detector 122 can be integral with mass analyzer 120. For example, in the case of a TOF mass analyzer, detector 122 can be a microchannel plate detector that counts intensity of ions, i.e., counts numbers of ions impinging it.

A raw data store 124 may provide permanent storage for storing the ion counts for analysis. For example, raw data store 124 can be an internal or external computer data storage device such as a disk, flash-based storage, and the like. An analysis computer 126 analyzes the stored data. Data can also be analyzed in real time without requiring storage in a storage medium 124. In real time analysis, detector 122 passes data to be analyzed directly to computer 126 without first storing it to permanent storage.

Collision cell 118 performs fragmentation of the precursor ions. Fragmentation can be used to determine the primary sequence of a peptide and subsequently lead to the identity of the originating protein. Collision cell 118 includes a gas such as helium, argon, nitrogen, air, or methane. When a charged precursor interacts with gas atoms, the resulting collisions can fragment the precursor by breaking it up into resulting fragment ions. Such fragmentation can be accomplished as using techniques described in Bateman by switching the voltage in a collision cell between a low voltage state (e.g., low energy, <5 V) which obtains MS spectra of the peptide precursor, with a high voltage state (e.g., high or elevated energy, >15V) which obtains MS spectra of the collisionally induced fragments of the precursors. High and low voltage may be referred to as high and low energy, since a high or low voltage respectively is used to impart kinetic energy to an ion.

Various protocols can be used to determine when and how to switch the voltage for such an MS/MS acquisition. For example, conventional methods trigger the voltage in either a targeted or data dependent mode (data-dependent analysis, DDA). These methods also include a coupled, gas-phase isolation (or pre-selection) of the targeted precursor. The low-energy spectra are obtained and examined by the software in real-time. When a desired mass reaches a specified intensity value in the low-energy spectrum, the voltage in the collision cell is switched to the high-energy state. The high-energy spectra are then obtained for the pre-selected precursor ion. These spectra contain fragments of the precursor peptide seen at low energy. After sufficient high-energy spectra are collected, the data acquisition reverts to low-energy in a continued search for precursor masses of suitable intensities for high-energy collisional analysis.

Different suitable methods may be used with a system as described herein to obtain ion information such as for precursor and product ions in connection with mass spectrometry for an analyzed sample. Although conventional switching techniques can be employed, embodiments may also use techniques described in Bateman which may be characterized as a fragmentation protocol in which the voltage is switched in a simple alternating cycle. This switching is done at a high enough frequency so that multiple high- and multiple low-energy spectra are contained within a single chromatographic peak. Unlike conventional switching protocols, the cycle is independent of the content of the data. Such switching techniques described in Bateman, provide for effectively simultaneous mass analysis of both precursor and product ions. In Bateman, using a high- and low-energy switching protocol may be applied as part of an LC/MS analysis of a single injection of a peptide mixture. In data acquired from the single injection or experimental run, the low-energy spectra contains ions primarily from unfragmented precursors, while the high-energy spectra contain ions primarily from fragmented precursors. For example, a portion of a precursor ion may be fragmented to form product ions, and the precursor and product ions are substantially simultaneously analyzed, either at the same time or, for example, in rapid succession through application of rapidly switching or alternating voltage to a collision cell of an MS module between a low voltage (e.g., generate primarily precursors) and a high or elevated voltage (e.g. generate primarily fragments) to regulate fragmentation. Operation of the MS in accordance with the foregoing techniques of Bateman by rapid succession of alternating between high (or elevated) and low energy may also be referred to herein as the Bateman technique and the high-low protocol.

The data acquired by the high-low protocol allows for the accurate determination of the retention times, mass-to-charge ratios, and intensities of all ions collected in both low- and high-energy modes. In general, different ions are seen in the two different modes, and the spectra acquired in each mode may then be further analyzed separately or in combination. The ions from a common precursor as seen in one or both modes will share the same retention times (and thus have substantially the same scan times) and peak shapes. The high-low protocol allows the meaningful comparison of different characteristics of the ions within a single mode and between modes. This comparison can then be used to group ions seen in both low-energy and high-energy spectra.

In summary, such as when operating the system using the Bateman technique, a sample 102 is injected into the LC/MS system. The LC/MS system produces two sets of spectra, a set of low-energy spectra and a set of high-energy spectra. The set of low-energy spectra contain primarily ions associated with precursors. The set of high-energy spectra contain primarily ions associated with fragments. These spectra are stored in a raw data store 124. After data acquisition, these spectra can be extracted from the raw data store 124 and displayed and processed by post-acquisition algorithms in the analysis computer 126.

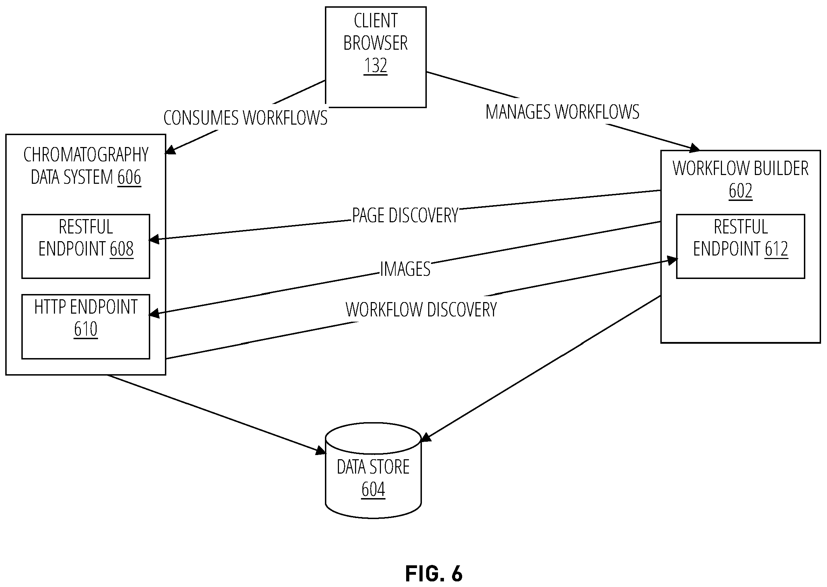

The analysis computer 126 may operate according to a workflow, providing visualizations of data to an analyst at each of the workflow steps and allowing the analyst to generate output data by performing processing specific to the workflow step. The workflow may be generated and retrieved via a client browser 132 (a suitable environment for building and storing a workflow is depicted in FIG. 6). As the analysis computer 126 performs the steps of the workflow, it may read raw data from a stream of data located in the raw data store 124. As the analysis computer 126 performs the steps of the workflow, it may generate processed data that is stored in a metadata catalog 130 in a document store 128. It may also generate audit records that may be stored in an audit log 134.

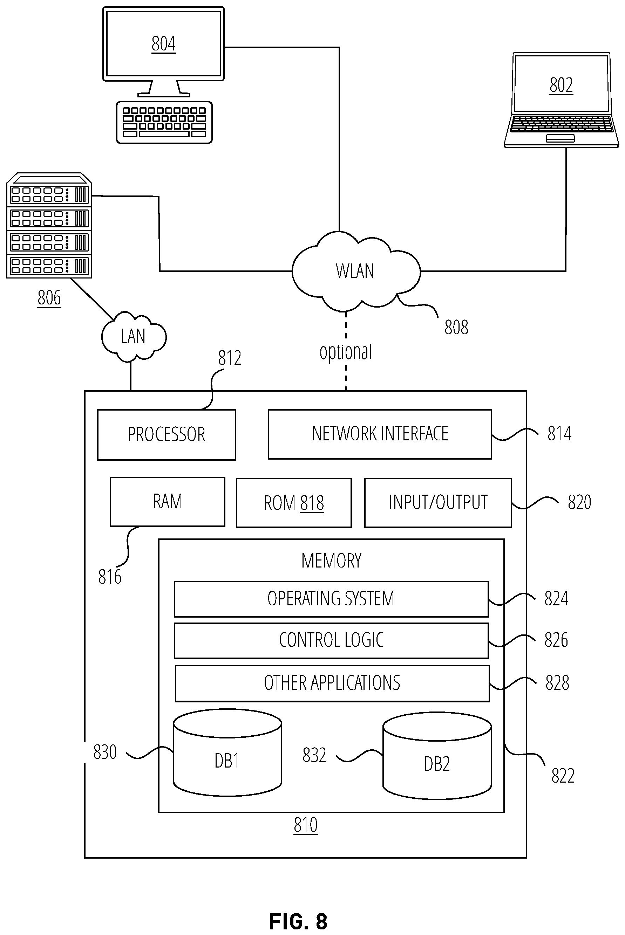

The exemplary embodiments described herein may be performed at the client browser 132 and analysis computer 126, among other locations. An example of a device suitable for use as an analysis computer 126 and/or client browser 132, is depicted in FIG. 8.

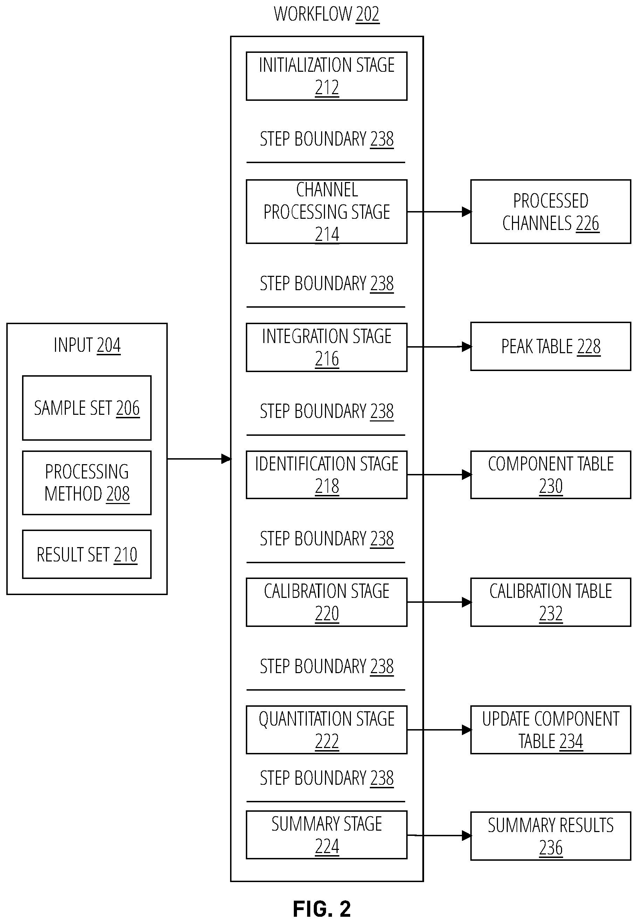

FIG. 2 depicts a simplified example of a workflow 202 that may be applied by the analysis computer 126 of FIG. 1. The workflow 202 is designed to take a set of inputs 204, apply a number of workflow steps or stages to the inputs to generate outputs at each stage, and continue to process the outputs at subsequent stages in order to generate results of the experiment. It is noted that the workflow 202 is a specific example of a workflow, and includes particular stages performed in a particular order. However, the present invention is not limited to the specific workflow depicted in FIG. 2. Other suitable workflows may have more, fewer, or different stages performed in different orders.

The initial set of inputs 204 may include a sample set 206, which includes the raw (unprocessed) data received from the chromatography experimental apparatus. This may include measurements or readings, such as mass-to-charge ratios. The measurements that are initially present in the sample set 206 may be measurements that have not been processed, for example to perform peak detection or other analysis techniques. The sample set 206 may include data in the form of a stream (e.g., a sequential list of data values received in a steady, continuous flow from an experimental apparatus).

The initial set of inputs 204 may also include a processing method 208, which may be a template method (as discussed above) that is applied to (and hence embedded in) the workflow 202. The processing method 208 may include settings to be applied at various stages of the workflow 202.

The initial set of inputs 204 may also include a result set 210. When created, the result set 210 may include the information from the sample set 206. In some cases, the sample set 206 may be processed in some initial manner when copied into the result set 210 - for example, MS data may require extracting, smoothing, etc. before being provided to a workflow 202. The processing applied to the initial result set 210 may be determined on a case-by-case basis based on the workflow 202 being used. Once the raw data is copied from a sample set 206 to create a result set 210, that result set 210 may be entirely independent from the sample set 206 for the remainder of its lifecycle.

The workflow 202 may be divided into a set of stages. Each stage may be associated with one or more stage processors that perform calculations related to that stage. Each stage processor may be associated with stage settings that affect how the processor generates output from a given input.

Stages may be separated from each other by step boundaries 238. The step boundaries 238 may represent points at which outputs have been generated by a stage and stored in the result set, at which point processing may proceed to the next stage. Some stage boundaries may require certain types of input in order to be crossed (for example, the data generated at a given stage might need to be reviewed by one or more reviewers, who need to provide their authorization in order to cross the step boundary 238 to the next stage). Step boundaries 238 may apply any time a user moves from one stage to a different stage, in any direction. For example, a step boundary 238 exists when a user moves from the initialization stage 212 to the channel processing stage 214, but also exists when a user attempts to move backwards from the quantitation stage 222 back to the integration stage 216. Step boundaries 238 may be ungated, meaning that once a user determines to move to the next stage no further input (or only a cursory input) is required, or gated, meaning that the user must provide some sort of confirmation indicating that they wish to proceed to a selected stage (perhaps in response to a warning raised by the analysis computer 126), or a reason for moving to a stage, or credentials authorizing the workflow 202 to proceed to the selected stage.

In an initialization stage 212, each of the stage processors may respond by clearing the results that it generates. For example, the stage processor for the channel processing stage 214 may clear all its derived channels and peak tables (see below). At any point in time, clearing a stage setting may clear stage tracking from the current stage and any subsequent stage. In this example, the initialization stage 212 does not generate any output.

After crossing a step boundary 238, processing may proceed to a channel processing stage 214. As noted above, chromatography detectors may be associated with one or more channels on which data may be collected. At the channel processing stage 214, the analysis computer 126 may derive a set of processing channels present in the data in the result set 210 and may output a list of processed channels 226. The list of processed channels 226 may be stored in a versioned sub-document associated with the channel processing stage 214, which may be included in the result set 210.

After crossing a step boundary 238, processing may proceed to an integration stage 216, which identifies peaks in the data in the result set 210 based on the list of processed channels 226. The integration stage 216 may identify the peaks using techniques specified in the settings for the integration stage 216, which may be defined in the processing method 208. The integration stage 216 may output a peak table 228 and store the peak table 228 in a versioned sub-document associated with the integration stage 216. The sub-document may be included in the result set 210.

After crossing a step boundary 238, processing may proceed to identification stage 218. In this stage, the analysis computer 126 may identify components in the mixture analyzed by the chromatography apparatus based on the information in the peak table 228. The identification stage 218 may output a component table 230, which includes a list of components present in the mixture. The component table 230 may be stored in a versioned sub-document associated with the identification stage 218. The sub-document may be included in the result set 210.

After crossing a step boundary 238, processing may proceed to calibration stage 220. During a chromatography experiment, calibration compounds may be injected into the chromatography apparatus. This process allows an analyst to account for subtle changes in electronics, cleanliness of surfaces, ambient conditions in the lab, etc. throughout an experiment. In the calibration stage 220, data obtained with respect to these calibration compounds is analyzed and used to generate a calibration table 232, which allows the analysis computer 126 to make corrections to the data to ensure that it is reliable and reproducible. The calibration table 232 may be stored in a versioned sub-document associated with the calibration stage 220. The sub-document may be included in the result set 210.

After crossing a step boundary 238, processing may proceed to quantitation stage 222. Quantitation refers to the process of determining a numerical value for the quantity of an analyte in a sample. The analysis computer 126 may use the results from the previous stages in order to quantify the components included in the component table 230. The quantitation stage 222 may update 234 the component table 230 stored in the result set 210 with the results of quantitation. The updated component table 230 may be stored in a versioned sub-document associated with the quantitation stage 222. The sub-document may be included in the result set 210.

After crossing a step boundary 238, processing may proceed to summary stage 224. In the summary stage 224, the results of each of the previous stages may be analyzed and incorporated into a report of summary results 236. The summary results 236 may be stored in a versioned sub-document associated with the summary stage 224. The sub-document maybe included in the result set 210.

As used herein, a step may correspond to the above-noted stages. Alternatively, a single stage may include multiple steps, or multiple stages may be organized into a single step. In any event, all the activities performed in a given step should be performable by the same user or group of users, and each step is associated with one or more pages that describe a set of configuration options for the step (e.g., visualization options, review options, step configuration settings, etc.)

There may be a transition at some or all of the step boundaries 238, although not every step boundary 238 need be a transition. A transition may signify a change in responsibility for a set of data from a first user or group of users to a second, distinct user or group of users.

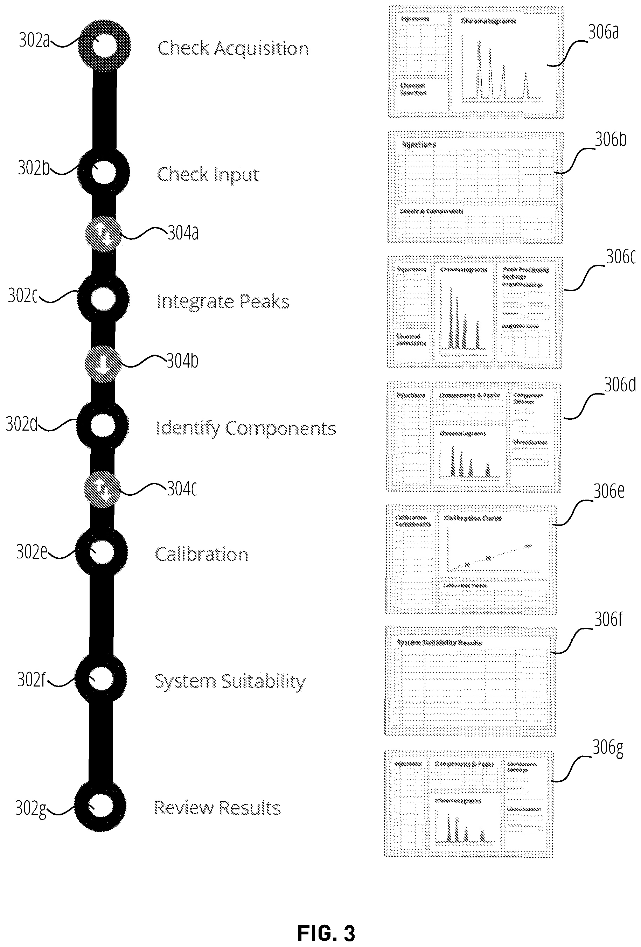

FIG. 3 depicts an example of a way that a workflow may be displayed in a user interface of a workflow builder (e.g., as might be displayed on the client browser 132 previously described).

In the user interface, a set of steps 302a-302g are arranged in an order. The user may be provided with a set of steps that can be arranged on the interface or may select from a number of pregenerated templates. The user may be permitted to move the steps in the order, although the workflow builder may enforce a relative ordering of certain steps (e.g., requiring that the integrate peaks step 302c be performed before the calibration step 302e).

Some or all of the steps may be separated by transitions 304a-304c. The transitions may be associated with a direction (e.g., allowing movement in the forward direction in the order, a reverse direction, or a forward direction and a reverse direction). The application implementing the workflow may enforce the transitions by only allowing movement in the workflow as indicated by the transitions. At each of the transitions, the application may enforce a change in data stewardship; responsibility for the data may be changed from a group of users associated with the steps before the transition to a group of users associated with the steps after the transition. The application may require that the group of users relinquishing and/or acquiring data access rights provide a signature.

Each of the steps 302a-302g may be associated with one or more pages defining different configurations for the steps (e.g., configurations and arrangements of visualization elements, settings for the step and/or visualization elements, etc.). The workflow builder may receive, via a user interface, a selection of one of the steps 302a - 302g and, in response, may display images of the pages available for use with the selected step. The images may show different configurations and arrangements of the visualization elements for the step. Upon receiving a selection of an image associated with one of the pages, the system may associate that page with the selected step. The page may define instructions as to how to arrange and configure the visualization elements/step. The application implementing the workflow may retrieve the page definitions and apply them to configure the visualization elements/steps being implemented by the application. FIG. 3 provides examples of pages 306a - 306g that have been selected for, and associated with, each of the steps 302a-302g.

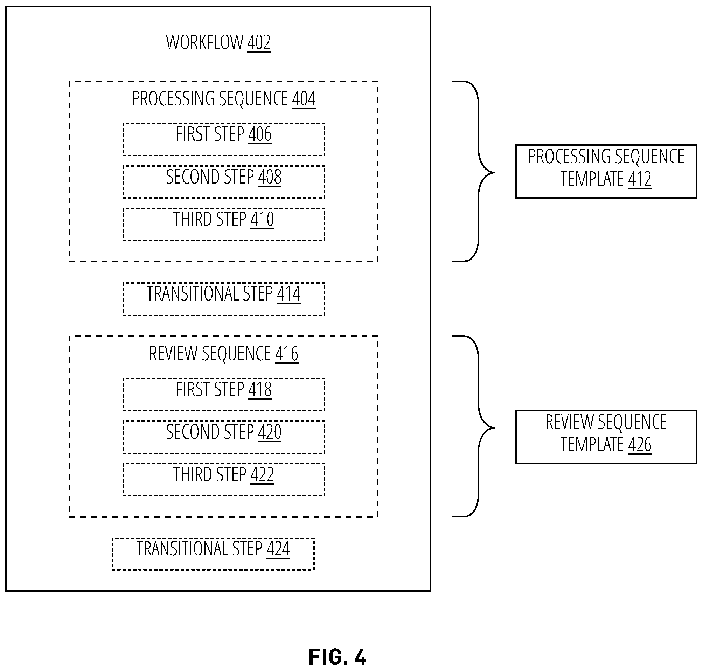

FIG. 4 depicts an example of an organizational structure for a workflow 402, according to an exemplary embodiment. The workflow 402 includes a number of steps 406, 408, 410, 418, 420, 422, each corresponding to a set of processing actions and/or computations related to a particular chromatography analysis task. As noted above, each is associated with a unique page or set of pages defining various configuration options for the step.

The steps may be organized into sequences 404, 416. Each sequence may be defined by a set of users that bears responsibility for the data generated at each step in the sequence. Whether a user has rights to run the step and/or generate data may be defined by a flag in a user profile associated with the user in a data system associated with the experimental analysis. For example, a data analyst or team of analysts may be responsible for generating data at the first step 406, second step 408, and third step 410 of the processing sequence 404. A reviewer or team of reviewers may be responsible for reviewing the data at the first step 418, second step 420, and third step 422 of the review sequence 416.

The identity and/or ordering of the steps within a sequence 404, 416 may be defined by a template. For example, the steps that are included in processing sequence 404 may be defined by a processing sequence template 412, which may also define their relative ordering and whether any steps are optional. Similarly, the steps that are included in the review sequence 416 may be defined by a review sequence template 426.

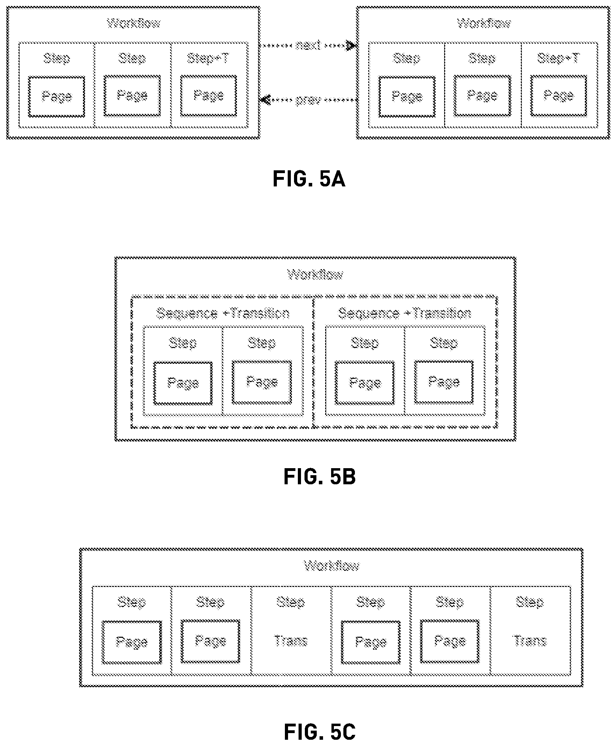

FIG. 5A, FIG. 5B, and FIG. 5C depict various structures for organizing a workflow. In particular, these Figures show various different options for how to incorporate transitions into a workflow.

FIG. 5A depicts an embodiment where the above-described sequences are each maintained by a distinct workflow. In this embodiment, each of the steps within a given workflow are assigned to a common user or set of users. For example, the first workflow could include data processing steps performed by a data analysis team, whereas the second workflow may include review steps performed by a review team. The last step of the workflow defines a transition and is used to transition to the first step of the next workflow.

Although effective, this organizational structure can be difficult to understand for users because it effectively represents a "workflow of work flows." Users generally expect that all of the steps for performing data analysis for a given chromatography experiment will be organized into a single workflow. It can also make navigation between workflows confusing, since the application guiding execution of the workflow may have difficulty interpreting how to render transitions between two different workflows. Furthermore, this concept contemplates the user interface for a workflow builder UI, since users generally have to work on each workflow in isolation and then combine individual workflows into a chain of workflows in order to generate a complete analysis of experimental data.

FIG. 5B provides an alternative that better matches users' intuition for what a workflow should be. In this example, a single workflow is built of a set of sequences, where different users or groups of users are responsible for the data in different sequences. Each sequence is associated with a transition, which is a part of the sequence (e.g., the sequence defines the steps that it includes, as well as the transition from the current sequence to the next sequence).

Conceptually, this embodiment is easier for users to grasp because it corresponds to preconceived notions of what a workflow should be. This embodiment also allows the workflow to be queried flexibly: for instance, a user can request a complete workflow, or a specific sequence within the workflow. It also allows logic to be built into the workflow itself that can simplify logic built into applications that visualize or execute the workflow; for example, a sequence could be coded as a "review" sequence, which may simplify tracking logic built into the application that determines whether a transition from one sequence to another is permitted.

However, as compared to the second embodiment, any actions associated with the transition (e.g., a signoff from one sequence to another) may need to be kept relatively simple, since the design of the transition needs to accommodate an entire sequence of steps.

FIG. 5C depicts yet another alternative that addresses some of the shortcomings of FIG. 5A and FIG. 5B. In this example, workflows are made up of a series of steps. Transitions occur between some of the steps, and the transitions represent special cases of the step type of or class. In other words, there is a data structure that represents a "step," and a transition is implemented using this same data structure. Conceptually, the steps between the transitions still represent sequences, although because the transitions are rendered as separate steps there is no need for an explicit sequence data structure.

This example has the benefit of matching users' understanding of the nature of a workflow, but simplifies the process by which an application uses and consumes the workflows as compared to the embodiment of FIG. 5B. This improvement serves to flatten the data model (e.g., fewer data structures are required, because the workflow can be represented as simply a series of steps, rather than steps and separate transitions). Consequently, the workflow builder does not need to make assumptions about how the workflow will be visualized on a particular system; this makes the workflow more generic and allows for easy extensibility to different applications. This also allows for a cleaner implementation that makes transitions easier to understand (both by end users who are building workflows, and by the engineers responsible for the workflow builder program). As a result, it is easier to maintain the workflow builder code.

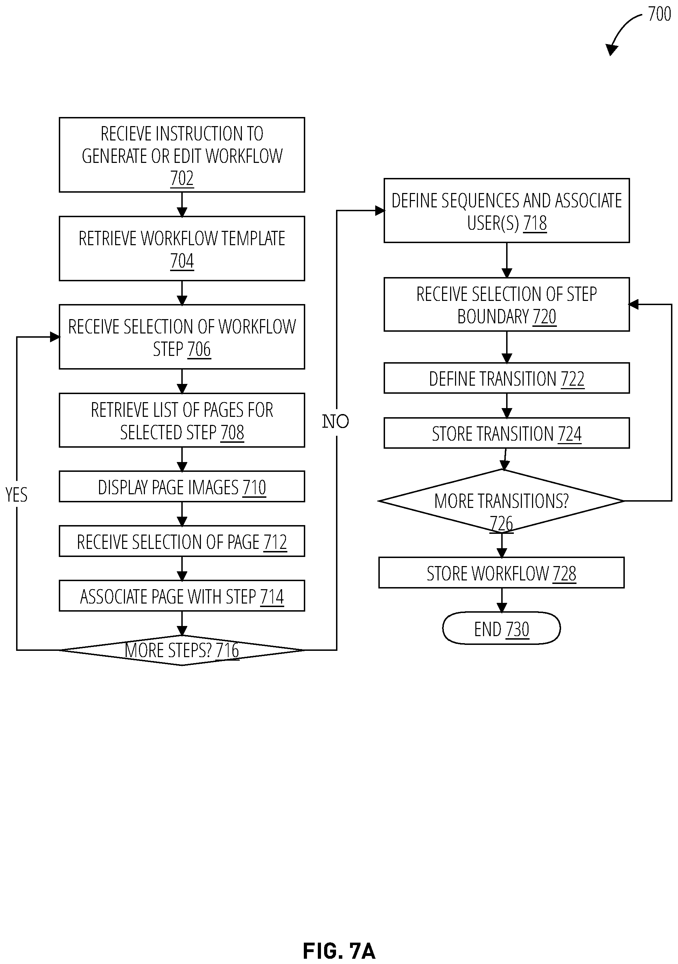

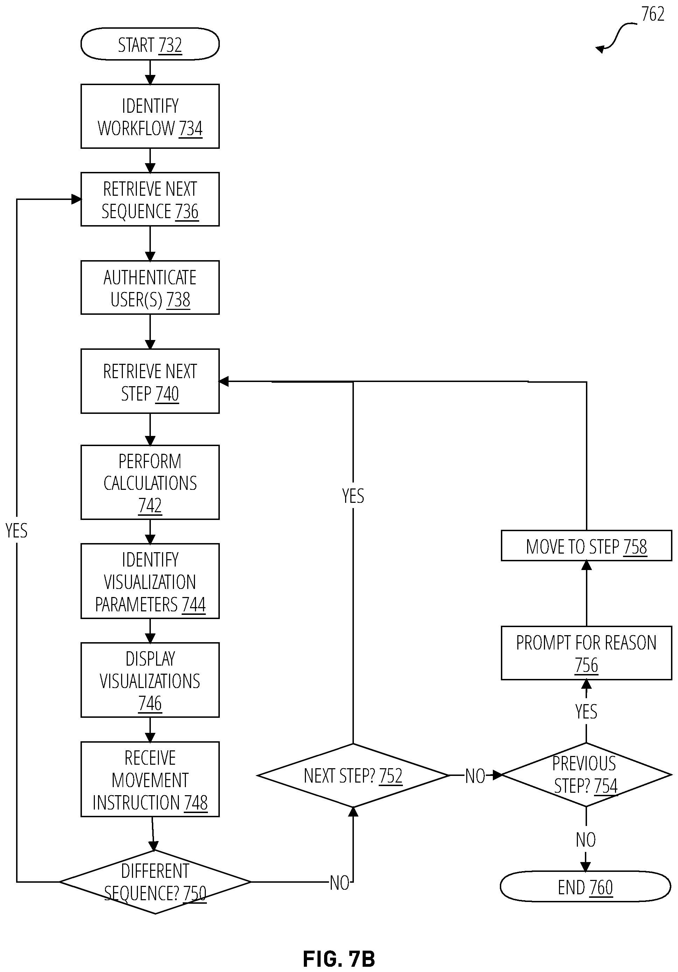

FIG. 6 depicts an exemplary environment for building, managing, and implementing workflows. This environment may be used in conjunction with the logic described in connection with FIG. 7A and FIG. 7B.

The environment includes a client browser 132, which allows an end user to interact with the system. The client browser 132 may provide user interfaces for creating and editing workflows.

The client browser 132 may manage workflows through a workflow builder 602. The workflow builder 602 may interact with a chromatography data system 606 to build the workflows. The workflow builder 602 and chromatography data system 606 may store and retrieve data related to the workflow in a data store 604.

The chromatography data system 606 may be responsible for defining and implementing pages that can be bound to each step in a workflow. These pages may be described by page definitions that the chromatography data system 606 stores in the data store 604. The workflow builder 602 may discover which pages are available for use with a given step via a RESTful endpoint 608. For example, when a user selects a step in the workflow for editing, the workflow builder 602 may issue a GET request to the RESTful endpoint 608 to retrieve any pages matching a page classification associated with the step (each step in a workflow may be represented by a hard-coded named classification of page definitions; when a step is added to the workflow, the user may be required to choose one variant from the associated classification of page definitions to assign that step to the workflow).

The page variations retrieved from the RESTful endpoint 608 may be presented to a user in a user interface, and the user may select one for inclusion in the workflow. Because the variations may define different configurations for visualization elements associated with the step, a summary/thumbnail image showing the configuration may be displayed in the user interface. The image may be retrieved from the chromatography data system 606 by calling into an HTTP endpoint 610.

The workflow builder 602 may use selections made in the user interface to build a workflow and store it in the data store 604. When a user wishes to consume (e.g., execute) the workflow, this process may be performed through the chromatography data system 606, which serves as a point of contact for several different stages for chromatography analysis in existing chromatography environments. To this end, the workflow builder 602 may expose a RESTful endpoint 612 that allows the current user to discover workflows available to them, based on (e.g.) a team folder context of the user. The chromatography data system 606 may make a GET call into the RESTful endpoint 612 to retrieve workflows per user per team folder context.

FIG. 7A depicts exemplary workflow building logic 700 for building and/or editing a workflow, according to an exemplary embodiment. The workflow building logic 700 may be embodied as a computer-implemented method or as instructions stored on a non-transitory computer-readable storage medium and may be configured to cause a processor to perform the logical blocks included in FIG. 7A. In some embodiments, the workflow building logic 700 may be performed by a computing system configured to perform the logical blocks included in FIG. 7A.

At block 702, the system may receive an instruction to generate or edit a workflow. This instruction may be received via a user interface presented on the client browser 132.

In response to receiving the instruction, at block 704 the system may retrieve one or more workflow templates. The workflow template may define an initial set of steps and an ordering for the steps. The workflow template may be one of a number of predefined workflow templates, each template corresponding to a set of steps commonly performed in different types of chromatography analyses. The template(s) to be retrieved may be selected via the user interface and/or specified as part of the instruction received at block 702. Alternatively, the system may begin with a blank workflow, allowing users to add workflow steps on an ad hoc basis.

At block 706, the system may receive a selection of a workflow step. This may be an existing step in the workflow that the user wishes to configure or edit or may be a selection of a new step for inclusion in the workflow. The user may define where in the workflow they wish the step to be - for example by defining a location among any existing workflow steps, or by moving an existing workflow step to a new location.

At block 708, the system may retrieve a list of pages for the selected step. For example, in response to receiving the selection of the workflow step at block 706, the workflow builder 602 may query the RESTful endpoint 608 to identify any available pages, and query the HTTP endpoint 610 of the chromatography data system 606 to retrieve images associated with the available pages, as described above. This may allow the workflow builder 602 to present the thumbnail images for the available pages at block 710 and receive a selection of one of the images at block 712. In response to receiving the selection of the image, the workflow builder 602 may configure the workflow to include the page corresponding to the selected image at block 714.

Each page may include one or more visualizations, and it may be possible to configure the visualization(s) by adjusting settings associated with the visualizations. The user may manually adjust the settings and/or may select from a number of predefined setting options for the visualizations. This configuration information may be stored as part of the page configuration for the step.

At decision block 716, the system may determine if more steps remain to be configured. For example, the workflow builder 602 may present an interface allowing the user to continue to add or edit steps, or to select an option for moving to the next part of workflow definition.

If more steps remain to be configured, then processing may revert to block 706 and the system may receive a selection of the next step to be processed. Otherwise, processing may proceed to block 718.

At block 718, the system may define sequences among the existing steps. For example, at block 720 the system may allow the user to select a step boundary (a location between two existing steps) in the interface and associate a transition with the step boundary. At block 722, the user may, using a user interface, define the transition. This may involve defining, for example, which directions the user can pass through the transition (e.g., forward, backward, or both), whether a warning is to be provided with the transition or whether a signature is required when passing through the transition, and/or what users become responsible for the data when passing through the data in each allowable direction. The steps between each transition may form a sequence.

At block 724, the system may store the transitions. The transitions may each be created as an instance of a step (e.g., using the same data structure as is used to define the steps in block 704 or block 706. The transitions may be stored as part of the workflow, in the same way steps are represented in the workflow. In some embodiments, an implicit transition may be added at the beginning of the workflow, and the system may prompt the user to identify which users should bear responsibility for the first sequence (alternatively, this may be specified as part of the selection process for selecting the templates to be included in the workflow). An implicit transition may also be added to the end of the workflow, indicating that the workflow is finished and that the results should be marked as final and locked from further editing.

At decision block 726, the system may determine if any more transitions remain to be defined. For example, the user interface may present the user with the option of continuing to define sequences or indicating that they are finished with this process. If more transitions remain to be defined, then processing may return to block 720. Otherwise, processing may proceed to block 728 and the system may store the workflow in the data store 604. The workflow may be represented as an encapsulating data structure that wraps around other data structures representing steps and gates. Gates have not been included in the flowchart of FIG. 7A for purposes of brevity, but can be defined in a manner similar to transitions. No separate data structure is needed for transitions, since they are simply represented as gates. Similarly, it may not be necessary to expressly store the sequences in a separate sequence structure, since the presence of a sequence can be inferred from the transitions.

Processing may then proceed to block 730 and end.

FIG. 7B depicts exemplary workflow execution logic 762, according to one exemplary embodiment. The workflow execution logic 762 may be embodied as a computer-implemented method or as instructions stored on a non-transitory computer-readable storage medium and may be configured to cause a processor to perform the logical blocks included in FIG. 7B. In some embodiments, the workflow execution logic 762 may be performed by a computing system configured to perform the logical blocks included in FIG. 7B.

Processing begins at block 732, when a user opens a user interface via the client browser 132. The interface may present the user with the option to select a workflow for execution, and at block 734 the user may identify, through the interface, the workflow to be started. The system may identify the location in the data store 604 at which the workflow's structure is stored. At the same time, raw data from an experiment to be analyzed by the workflow may be retrieved. The raw data may be in the form of a data stream stored in a raw data store 124.

At block 736, the system may retrieve the next sequence in the workflow for execution. When first starting, first step or sequence may be selected. In some embodiments, the system refrains from retrieving all the steps in the workflow, and only retrieves the sequence of steps that end at the next transition. In other embodiments, the system retrieves those steps and a predefined number (e.g., one) of steps beyond the transition. Similarly, if there were steps before the current sequence, a predefined number (e.g., one) of those steps may be retrieved. The user interface may be updated with a navigation pane that indicates the steps in the current sequence, the current step being implemented, and/or any retrieved steps that precede or succeed the current sequence.

At block 738, the system may authenticate the current user or users to verify that they are permitted to access the current sequence. For example, the transition into the current sequence may define the specific users, or a class of users (e.g., "reviewers" or "data analysts") that are permitted to access the current sequence. The system may consult a profile of the current user accessible to the system to ensure that the current user(s) match the authorized list or classes of users. If not, the system may display an error message indicating that the current user is not authorized and terminate processing.

The users who are authenticated at block 783 may be recorded in an audit log, which is a data structure that stores information and events about the workflow as it is executed. As control is handed off to different users through the transitions, the new users that are authenticated in subsequent iterations of block 738 may also be logged in the audit log.

If the users are authorized, then at block 740 the system may retrieve the next step in the sequence identified at block 736. At this block, the system may (for example) retrieve the page configuration for the current step, as was defined in block 714 in FIG. 7A.

At block 742, the system may retrieve perform any calculations associated with the step in order to generate output results. As the system performs calculations, it may generate metadata related to the workflow. The metadata may be stored in a metadata catalog 130 in a document store 128, separate from the data stream stored in the raw data store 124.

The system may rely on one or more settings for the workflow in order to perform the calculations at block 742. Before performing the calculations, the user may change one or more of the settings. In this event, the system may log the changes in the audit log. The system may also optionally prompt the user for a reason as to why the settings were changed, and may log the reason in the audit log.

At block 744, the system may identify any visualization parameters defined in the page associated with the step, and may construct one or more visualization elements for display in the user interface based on the parameters. The system may configure or format the visualization elements according to the configuration specified by the page, and display the configured visualization elements on the user interface at block 746.

At block 748, the system may receive a movement instruction to move away from the current step. This may be an instruction to move to a next step, to move backwards to a previous step, or to exit the workflow. In some embodiments, any movement through the workflow may be logged in the audit log. In other embodiments, only certain types of movement may trigger auditing, such as when the user moves backwards to a previous step.

If the movement instruction would cause the user to move forward or backward over a transition to a different sequence ("YES" at decision block 750), then the movement may be logged and the user may be asked for a signature or confirmation. At this point, the workflow will transition to a new set of authorized users, and so processing returns to block 736 where the next sequence is retrieved. The navigation panel may be updated with the new steps retrieved at block 736. The system may log the handoff from one set of users to another in the audit log.

If the movement is forward to another step within the same sequence ("YES" at block 752), then further authentication is not required; processing may return to block 740, and the next step to be executed may be retrieved.

If the movement is backwards to a previous step within the same sequence ("YES" at block 754), then no new authentication is required. However, the user may be prompted for a reason for moving backwards to a previous step at block 756, and the reason may be logged in the audit log. After providing their reason, processing may proceed to block 758 and the system may move to the requested step.

If the request is a request to exit the workflow ("NO" at decision block 750, decision block 752, and decision block 754, then processing may proceed to done block 760 and end.

FIG. 8 illustrates one example of a system architecture and data processing device that may be used to implement one or more illustrative aspects described herein in a standalone and/or networked environment. Various network nodes, such as the data server 810, web server 806, computer 804, and laptop 802 may be interconnected via a wide area network 808 (WAN), such as the internet. Other networks may also or alternatively be used, including private intranets, corporate networks, LANs, metropolitan area networks (MANs) wireless networks, personal networks (PANs), and the like. Network 808 is for illustration purposes and may be replaced with fewer or additional computer networks. A local area network (LAN) may have one or more of any known LAN topology and may use one or more of a variety of different protocols, such as ethernet. Devices data server 810, web server 806, computer 804, laptop 802 and other devices (not shown) may be connected to one or more of the networks via twisted pair wires, coaxial cable, fiber optics, radio waves or other communication media.

Computer software, hardware, and networks may be utilized in a variety of different system environments, including standalone, networked, remote-access (aka, remote desktop), virtualized, and/or cloud-based environments, among others.

The term "network" as used herein and depicted in the drawings refers not only to systems in which remote storage devices are coupled together via one or more communication paths, but also to stand-alone devices that may be coupled, from time to time, to such systems that have storage capability. Consequently, the term "network" includes not only a "physical network" but also a "content network," which is comprised of the data--attributable to a single entity--which resides across all physical networks.

The components may include data server 810, web server 806, and client computer 804, laptop 802. Data server 810 provides overall access, control and administration of databases and control software for performing one or more illustrative aspects described herein. Data serverdata server 810 may be connected to web server 806 through which users interact with and obtain data as requested. Alternatively, data server 810 may act as a web server itself and be directly connected to the internet. Data server 810 may be connected to web server 806 through the network 808 (e.g., the internet), via direct or indirect connection, or via some other network. Users may interact with the data server 810 using remote computer 804, laptop 802, e.g., using a web browser to connect to the data server 810 via one or more externally exposed web sites hosted by web server 806. Client computer 804, laptop 802 may be used in concert with data server 810 to access data stored therein, or may be used for other purposes. For example, from client computer 804, a user may access web server 806 using an internet browser, as is known in the art, or by executing a software application that communicates with web server 806 and/or data server 810 over a computer network (such as the internet).

Servers and applications may be combined on the same physical machines, and retain separate virtual or logical addresses, or may reside on separate physical machines. FIG. 8 illustrates just one example of a network architecture that may be used, and those of skill in the art will appreciate that the specific network architecture and data processing devices used may vary, and are secondary to the functionality that they provide, as further described herein. For example, services provided by web server 806 and data server 810 may be combined on a single server.

Each component data server 810, web server 806, computer 804, laptop 802 may be any type of known computer, server, or data processing device. Data server 810, e.g., may include a processor 812 controlling overall operation of the data server 810. Data server 810 may further include RAM 816, ROM 818, network interface 814, input/output interfaces 820 (e.g., keyboard, mouse, display, printer, etc.), and memory 822. Input/output interfaces 820 may include a variety of interface units and drives for reading, writing, displaying, and/or printing data or files. Memory 822 may further store operating system software 824 for controlling overall operation of the data server 810, control logic 826 for instructing data server 810 to perform aspects described herein, and other application software 828 providing secondary, support, and/or other functionality which may or may not be used in conjunction with aspects described herein. The control logic may also be referred to herein as the data server software control logic 826. Functionality of the data server software may refer to operations or decisions made automatically based on rules coded into the control logic, made manually by a user providing input into the system, and/or a combination of automatic processing based on user input (e.g., queries, data updates, etc.).

Memory 1122 may also store data used in performance of one or more aspects described herein, including a first database 832 and a second database 830. In some embodiments, the first database may include the second database (e.g., as a separate table, report, etc.). That is, the information can be stored in a single database, or separated into different logical, virtual, or physical databases, depending on system design. Web server 806, computer 804, laptop 802 may have similar or different architecture as described with respect to data server 810. Those of skill in the art will appreciate that the functionality of data server 810 (or web server 806, computer 804, laptop 802) as described herein may be spread across multiple data processing devices, for example, to distribute processing load across multiple computers, to segregate transactions based on geographic location, user access level, quality of service (QoS), etc.

One or more aspects may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HTML or XML. The computer executable instructions may be stored on a computer readable medium such as a nonvolatile storage device. Any suitable computer readable storage media may be utilized, including hard disks, CD-ROMs, optical storage devices, magnetic storage devices, and/or any combination thereof. In addition, various transmission (non-storage) media representing data or events as described herein may be transferred between a source and a destination in the form of electromagnetic waves traveling through signal-conducting media such as metal wires, optical fibers, and/or wireless transmission media (e.g., air and/or space). various aspects described herein may be embodied as a method, a data processing system, or a computer program product. Therefore, various functionalities may be embodied in whole or in part in software, firmware and/or hardware or hardware equivalents such as integrated circuits, field programmable gate arrays (FPGA), and the like. Particular data structures may be used to more effectively implement one or more aspects described herein, and such data structures are contemplated within the scope of computer executable instructions and computer-usable data described herein.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the exemplary devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

At least one computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Moreover, unless otherwise noted the features described above are recognized to be usable together in any combination. Thus, any features discussed separately may be employed in combination with each other unless it is noted that the features are incompatible with each other.

With general reference to notations and nomenclature used herein, the detailed descriptions herein may be presented in terms of program procedures executed on a computer or network of computers. These procedural descriptions and representations are used by those skilled in the art to most effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in most cases, in any of the operations described herein, which form part of one or more embodiments. Rather, the operations are machine operations. Useful machines for performing operations of various embodiments include general purpose digital computers or similar devices.

Some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still cooperate or interact with each other.

Various embodiments also relate to apparatus or systems for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove convenient to construct more specialized apparatus to perform the required method steps. The required structure for a variety of these machines will appear from the description given.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the scope of the appended claims.

## Claims

1. A computer-implemented method comprising:
receiving an instruction to generate a workflow (202) for analyzing results of a chromatography experiment, wherein:
the workflow (202) comprises a plurality of steps (302a-302g),
each step (302a-302g) is associated with one or more pages (306a-306g), and
each page represents a variation of the step;
receiving a selection, via a user interface, of a step to be edited;
receiving a selection, via the user interface, of a page for the selected step;
configuring the workflow (202) to include the selected page; and
adding a transition (304a-304c) to the workflow (202), the transition representing a change in data custody from a current step of the plurality of steps (302a-302g) to a next step of the plurality of steps (302a-302g), wherein the current step is configured to be performed by a first user and the next step is configured to be performed by a second user different from the first user.

2. The method of claim 1, wherein the steps (302a-302g) are defined by a data structure, and the transition is defined by the same data structure to be a particular kind of step (302a-302g); or
wherein the steps (302a-302g) are organized into one or more sequences, and each sequence is configured with a transition (304a-304c) to a next sequence in the workflow (202), to a previous sequence of the workflow (202), or to an end of the workflow (202); or
further comprising:
identifying a predefined ordering for a subset of the plurality of steps (302a-302g); and
enforcing the predefined ordering when generating the workflow (202).

3. The method of claim 1, further comprising executing the workflow (202), the executing comprising:
identifying the first user who performed the current step;
logging the first user in an audit log (134);
arriving at the transition;
identifying the second user responsible for performing the second step;
handing off control of the workflow (202) from the first user to the second user; and
logging the second user in the audit log (134); optionally
wherein the first user and the second user are each associated with user profiles, and identifying the second user comprises identifying, in the profile associated with the second user, that the second user has access rights for the second step.

4. The method of claim 1, wherein:
a first subset of the plurality of steps (302a-302g) are associated with a processing template (412), the processing template (412) defining one or more customizable pages of visualizations for each step (302a-302g); and
a second subset of the plurality of steps (302a-302g) are associated with a review template (426), the review template (426) specifying one or more actions to be taken by a reviewer of data generated by the first subset of the plurality of steps (302a-302g).

5. The method of claim 1, wherein at least one of the pages is associated with a visualization element configured to display data associated with a step corresponding to the page on a user interface, and further comprising receiving a configuration for the visualization element that controls how the visualization element displays the data; optionally,
wherein receiving the configuration comprises:
identifying a plurality of predefined display formats associated with the page; and
receiving a selection of one of the predefined display formats.

6. The method of claim 1, further comprising executing the workflow (202), the executing comprising:
receiving, at a first step of the plurality of steps (302a-302g), a stream of raw data acquired during the chromatography experiment, the stream of raw data stored in a raw data store (124);
generating, at the first step, metadata derived from processing the raw data; and
storing the metadata in a metadata catalog (130) distinct from the stream of raw data, the metadata catalog (130) stored in a document store (128) distinct from the raw data store (124).

7. The method of claim 1, further comprising executing the workflow (202), the executing comprising:
receiving an instruction to move from one of the plurality of steps (302a-302g) to another of the plurality of steps (302a-302g) in the workflow (202);
logging the movement in an audit log (134); optionally
wherein the another of the plurality of steps (302a-302g) precedes the one of the plurality of steps (302a-302g) in the workflow (202), and further comprising:
prompting a user who initiated the movement to enter a reason for returning to the another one of the plurality of steps (302a-302g); and
logging the reason in the audit log (134); or
wherein the user makes a change to a setting at the another one of the plurality of steps (302a-302g), and further comprising:
prompting the user who initiated the movement to enter a reason for changing the setting; and
logging the reason in the audit log (134).

8. A non-transitory computer-readable storage medium, the computer-readable storage medium including instructions that when executed by a computer, cause the computer to:
receive an instruction to generate a workflow (202) for analyzing results of a chromatography experiment, wherein:
the workflow (202) comprises a plurality of steps (302a-302g),
each step is associated with one or more pages (306a-306g), and
each page represents a variation of the step;
receive a selection, via a user interface, of a step to be edited;
receive a selection, via the user interface, of a page for the selected step;
configure the workflow (202) to include the selected page; and
add a transition (304a-304c) to the workflow (202), the transition representing a change in data custody from a current step of the plurality of steps (302a-302g) to a next step of the plurality of steps (302a-302g), wherein the current step is configured to be performed by a first user and the next step is configured to be performed by a second user different from the first user.

9. The computer-readable storage medium of claim 8, wherein the steps (302a-302g) are defined by a data structure, and the transition is defined by the same data structure to be a particular kind of step (302a-302g); or
wherein the steps (302a-302g) are organized into one or more sequences, and each sequence is configured with a transition (304a-304c) to a next sequence in the workflow (202), to a previous sequence of the workflow (202), or to an end of the workflow (202); or
wherein the instructions further configure the computer to:
identify a predefined ordering for a subset of the plurality of steps (302a-302g); and
enforce the predefined ordering when generating the workflow (202); or
wherein the instructions further configure the computer to execute the workflow (202), the executing comprising:
identify the first user who performed the current step;
log the first user in an audit log (134);
arrive at the transition;
identify the second user responsible for performing the second step;
hand off control of the workflow (202) from the first user to the second user; and
log the second user in the audit log; optionally
wherein the first user and the second user are each associated with user profiles, and identify the second user comprises identifying, in the profile associated with the second user, that the second user has access rights for the second step.

10. The computer-readable storage medium of claim 8, wherein:
a first subset of the plurality of steps (302a-302g) are associated with a processing template (412), the processing template (412) define one or more customizable pages of visualizations for each step (302a-302g); and
a second subset of the plurality of steps (302a-302g) are associated with a review template (426), the review template (426) specify one or more actions to be taken by a reviewer of data generated by the first subset of the plurality of steps (302a-302g); or
wherein at least one of the pages is associated with a visualization element configured to display data associated with a step corresponding to the page on a user interface, and wherein the instructions further configure the computer to receive a configuration for the visualization element that controls how the visualization element displays the data; optionally
wherein receiving the configuration comprises:
identify a plurality of predefined display formats associated with the page; and
receive a selection of one of the predefined display formats.

11. The computer-readable storage medium of claim 14, wherein the instructions further configure the computer to execute the workflow (202), the executing comprising:
receive, at a first step of the plurality of steps (302a-302g), a stream of raw data acquired during the chromatography experiment, the stream of raw data stored in a raw data store (124);
generate, at the first step, metadata derived from processing the raw data; and
store the metadata in a metadata catalog (130) distinct from the stream of raw data, the metadata catalog (130) stored in a document store (128) distinct from the raw data store (124); or
wherein the instructions further configure the computer to execute the workflow (202), the executing comprising:
receive an instruction to move from one of the plurality of steps (302a-302g) to another of the plurality of steps (302a-302g) in the workflow (202);
log the movement in an audit log (134); optionally
wherein the another of the plurality of steps (302a-302g) precedes the one of the plurality of steps (302a-302g) in the workflow (202), and wherein the instructions further configure the computer to:
prompt a user who initiated the movement to enter a reason for returning to the another one of the plurality of steps (302a-302g); and
log the reason in the audit log (134); or
wherein the user makes a change to a setting at the another one of the plurality of steps (302a-302g), and wherein the instructions further configure the computer to:
prompt the user who initiated the movement to enter a reason for changing the setting; and
log the reason in the audit log (134).

12. A computing apparatus comprising:
a processor; and
a memory storing instructions that, when executed by the processor, configure the apparatus to:
receive an instruction to generate a workflow (202) for analyzing results of a chromatography experiment, wherein:
the workflow (202) comprises a plurality of steps (302a-302g),
each step (302a-302g) is associated with one or more pages (306a-306g), and
each page represents a variation of the step;
receive a selection, via a user interface, of a step to be edited;
receive a selection, via the user interface, of a page for the selected step;
configure the workflow (202) to include the selected page; and
add a transition (304a-304c) to the workflow (202), the transition representing a change in data custody from a current step of the plurality of steps (302a-302g) to a next step of the plurality of steps (302a-302g), wherein the current step is configured to be performed by a first user and the next step is configured to be performed by a second user different from the first user.

13. The computing apparatus of claim 12, wherein the steps (302a-302g) are defined by a data structure, and the transition is defined by the same data structure to be a particular kind of step (302a-302g); or
wherein the steps (302a-302g) are organized into one or more sequences, and each sequence is configured with a transition (304a-304c) to a next sequence in the workflow (202), to a previous sequence of the workflow (202), or to an end of the workflow (202); or
wherein the instructions further configure the apparatus to:
identify a predefined ordering for a subset of the plurality of steps (302a-302g); and
enforce the predefined ordering when generating the workflow (202); or
wherein the instructions further configure the apparatus to execute the workflow (202), the executing comprising:
identify the first user who performed the current step;
log the first user in an audit log (134);
arrive at the transition;
identify the second user responsible for performing the second step;
hand off control of the workflow (202) from the first user to the second user; and
log the second user in the audit log (134); optionally
wherein the first user and the second user are each associated with user profiles, and identify the second user comprises identifying, in the profile associated with the second user, that the second user has access rights for the second step.

14. The computing apparatus of claim 12, wherein:
a first subset of the plurality of steps (302a-302g) are associated with a processing template (412), the processing template (412) define one or more customizable pages of visualizations for each step (302a-302g); and
a second subset of the plurality of steps (302a-302g) are associated with a review template (426), the review template (426) specify one or more actions to be taken by a reviewer of data generated by the first subset of the plurality of steps (302a-302g); or
wherein at least one of the pages is associated with a visualization element configured to display data associated with a step corresponding to the page on a user interface, and wherein the instructions further configure the apparatus to receive a configuration for the visualization element that controls how the visualization element displays the data; optionally
wherein receiving the configuration comprises:
identify a plurality of predefined display formats associated with the page; and
receive a selection of one of the predefined display formats.

15. The computing apparatus of claim 12, wherein the instructions further configure the apparatus to execute the workflow (202), the executing comprising:
receive, at a first step of the plurality of steps (302a-302g), a stream of raw data acquired during the chromatography experiment, the stream of raw data stored in a raw data store (124);
generate, at the first step, metadata derived from processing the raw data; and
store the metadata in a metadata catalog (130) distinct from the stream of raw data, the metadata catalog (130) stored in a document store (128) distinct from the raw data store (124); or
wherein the instructions further configure the apparatus to execute the workflow (202), the executing comprising:
receive an instruction to move from one of the plurality of steps (302a-302g) to another of the plurality of steps (302a-302g) in the workflow (202);
log the movement in an audit log (134); optionally
wherein the another of the plurality of steps (302a-302g) precedes the one of the plurality of steps (302a-302g) in the workflow (202), and wherein the instructions further configure the apparatus to:
prompt a user who initiated the movement to enter a reason for returning to the another one of the plurality of steps (302a-302g); and
log the reason in the audit log (134); or
wherein the user makes a change to a setting at the another one of the plurality of steps (302a-302g), and wherein the instructions further configure the apparatus to:
prompt the user who initiated the movement to enter a reason for changing the setting; and
log the reason in the audit log (134).

## Patentansprüche

1. Computerimplementiertes Verfahren, umfassend:
Empfangen einer Anweisung zum Erzeugen eines Arbeitsablaufs (202) zur Analyse von Ergebnissen eines Chromatographieexperiments, wobei:
der Arbeitsablauf (202) eine Vielzahl von Schritten (302a-302g) umfasst,
jeder Schritt (302a-302g) einer oder mehreren Seiten (306a-306g) zugeordnet ist, und
jede Seite eine Variation des Schritts darstellt;
Empfangen einer Auswahl, über eine Benutzerschnittstelle, eines zu bearbeitenden Schritts;
Empfangen einer Auswahl, über die Benutzerschnittstelle, einer Seite für den ausgewählten Schritt;
Konfigurieren des Arbeitsablaufs (202), um die ausgewählte Seite einzuschließen; und
Hinzufügen eines Übergangs (304a-304c) zu dem Arbeitsablauf (202), wobei der Übergang eine Änderung in der Datenverwahrung von einem aktuellen Schritt der Vielzahl von Schritten (302a-302g) zu einem nächsten Schritt der Vielzahl von Schritten (302a-302g) darstellt, wobei der aktuelle Schritt konfiguriert ist, um von einem ersten Benutzer durchgeführt zu werden, und der nächste Schritt konfiguriert ist, um von einem zweiten Benutzer durchgeführt zu werden, der sich von dem ersten Benutzer unterscheidet.

2. Verfahren nach Anspruch 1, wobei die Schritte (302a-302g) durch eine Datenstruktur definiert sind, und der Übergang durch dieselbe Datenstruktur definiert ist, um eine bestimmte Art von Schritt (302a-302g) zu sein; oder
wobei die Schritte (302a-302g) in einer oder mehreren Sequenzen organisiert sind, und jede Sequenz mit einem Übergang (304a-304c) zu einer nächsten Sequenz in dem Arbeitsablauf (202), zu einer vorherigen Sequenz des Arbeitsablaufs (202) oder zu einem Ende des Arbeitsablaufs (202) konfiguriert ist; oder
ferner umfassend:
Identifizieren einer vordefinierten Reihenfolge für eine Teilmenge der Vielzahl von Schritten (302a-302g); und
Durchsetzen der vordefinierten Reihenfolge beim Erzeugen des Arbeitsablaufs (202).

3. Verfahren nach Anspruch 1, ferner umfassend Ausführen des Arbeitsablaufs (202), wobei das Ausführen umfasst:
Identifizieren des ersten Benutzers, der den aktuellen Schritt durchgeführt hat;
Protokollieren des ersten Benutzers in einem Prüfprotokoll (134);
Erreichen des Übergangs;
Identifizieren des zweiten Benutzers, der für die Durchführung des zweiten Schritts verantwortlich ist;
Übergeben der Steuerung des Arbeitsablaufs (202) von dem ersten Benutzer an den zweiten Benutzer; und
Protokollieren des zweiten Benutzers im Prüfprotokoll (134); optional
wobei der erste Benutzer und der zweite Benutzer jeweils Benutzerprofilen zugeordnet sind, und das Identifizieren des zweiten Benutzers Identifizieren in dem dem zweiten Benutzer zugeordneten Profil umfasst, dass der zweite Benutzer Zugriffsrechte für den zweiten Schritt hat.

4. Verfahren nach Anspruch 1, wobei:
eine erste Teilmenge der Vielzahl von Schritten (302a-302g) einer Verarbeitungsvorlage (412) zugeordnet ist, wobei die Verarbeitungsvorlage (412) eine oder mehrere anpassbare Seiten von Visualisierungen für jeden Schritt (302a-302g) definiert; und
eine zweite Teilmenge der Vielzahl von Schritten (302a-302g) einer Überprüfungsvorlage (426) zugeordnet ist, wobei die Überprüfungsvorlage (426) eine oder mehrere Aktionen spezifiziert, die von einem Prüfer von Daten durchzuführen sind, die von der ersten Teilmenge der Vielzahl von Schritten (302a-302g) erzeugt werden.

5. Verfahren nach Anspruch 1, wobei mindestens eine der Seiten einem Visualisierungselement zugeordnet ist, das konfiguriert ist, um Daten anzuzeigen, die einem der Seite entsprechenden Schritt auf einer Bedienerschnittstelle zugeordnet sind, und ferner umfassend Empfangen einer Konfiguration für das Visualisierungselement, die steuert, wie das Visualisierungselement die Daten anzeigt; optional
wobei das Empfangen der Konfiguration umfasst:
Identifizieren einer Vielzahl von vorgegebenen Anzeigeformaten, die der Seite zugeordnet sind; und Empfangen einer Auswahl eines der vorgegebenen Anzeigeformate.

6. Verfahren nach Anspruch 1, ferner umfassend Ausführen des Arbeitsablaufs (202), wobei das Ausführen umfasst:
Empfangen, in einem ersten Schritt der Vielzahl von Schritten (302a-302g), eines Stroms von Rohdaten, die während des Chromatographieexperiments erfasst wurden, wobei der Strom von Rohdaten in einem Rohdatenspeicher (124) gespeichert wird;
Erzeugen, in dem ersten Schritt, von Metadaten, die aus der Verarbeitung der Rohdaten abgeleitet werden; und
Speichern der Metadaten in einem Metadatenkatalog (130), der von dem Strom von Rohdaten getrennt ist, wobei der Metadatenkatalog (130) in einem Dokumentenspeicher (128) gespeichert ist, der von dem Rohdatenspeicher (124) getrennt ist.

7. Verfahren nach Anspruch 1, ferner umfassend Ausführen des Arbeitsablaufs (202), wobei das Ausführen umfasst:
Empfangen einer Anweisung, von einem der Vielzahl von Schritten (302a-302g) zu einem anderen der Vielzahl von Schritten (302a-302g) in dem Arbeitsablauf (202) zu wechseln;
Protokollieren der Bewegung in einem Prüfprotokoll (134); optional
wobei der andere der Vielzahl von Schritten (302a-302g) dem einen der Vielzahl von Schritten (302a-302g) in dem Arbeitsablauf (202) vorangeht, und ferner umfassend:
Auffordern eines Benutzers, der die Bewegung eingeleitet hat, einen Grund für die Rückkehr zu dem anderen der Vielzahl von Schritten (302a-302g) einzugeben; und
Protokollieren des Grunds in dem Prüfprotokoll (134); oder
wobei der Benutzer eine Änderung an einer Einstellung bei dem anderen der Vielzahl von Schritten (302a-302g) vornimmt, und ferner umfassend:
Auffordern des Benutzers, der die Bewegung initiiert hat, einen Grund für die Änderung der Einstellung einzugeben; und
Protokollieren des Grunds im Prüfprotokoll (134).

8. Nicht-transitorisches computerlesbares Speichermedium, wobei das computerlesbare Speichermedium Anweisungen einschließt, die, wenn sie von einem Computer ausgeführt werden, den Computer veranlassen:
eine Anweisung zu empfangen, einen Arbeitsablauf (202) zum Analysieren von Ergebnissen eines Chromatographieexperiments zu erzeugen, wobei:
der Arbeitsablauf (202) eine Vielzahl von Schritten (302a-302g) umfasst,
jeder Schritt einer oder mehreren Seiten (306a-306g) zugeordnet ist, und
jede Seite eine Variation des Schritts darstellt;
eine Auswahl eines zu bearbeitenden Schritts über eine Bedienerschnittstelle zu empfangen;
eine Auswahl einer Seite für den ausgewählten Schritt über die Bedienerschnittstelle zu empfangen;
den Arbeitsablauf (202) zu konfigurieren, um die ausgewählte Seite einzuschließen; und
einen Übergang (304a-304c) zu dem Arbeitsablauf (202) hinzuzufügen, wobei der Übergang eine Änderung der Datenverwahrung von einem aktuellen Schritt der Vielzahl von Schritten (302a-302g) zu einem nächsten Schritt der Vielzahl von Schritten (302a-302g) darstellt, wobei der aktuelle Schritt konfiguriert ist, um von einem ersten Benutzer durchgeführt zu werden, und der nächste Schritt konfiguriert ist, um von einem zweiten Benutzer durchgeführt zu werden, der sich von dem ersten Benutzer unterscheidet.

9. Computerlesbares Speichermedium nach Anspruch 8, wobei die Schritte (302a-302g) durch eine Datenstruktur definiert sind, und der Übergang durch dieselbe Datenstruktur definiert ist, um eine bestimmte Art von Schritt (302a-302g) zu sein; oder
wobei die Schritte (302a-302g) in einer oder mehreren Sequenzen organisiert sind, und jede Sequenz mit einem Übergang (304a-304c) zu einer nächsten Sequenz in dem Arbeitsablauf (202), zu einer vorherigen Sequenz des Arbeitsablaufs (202) oder zu einem Ende des Arbeitsablaufs (202) konfiguriert ist; oder
wobei die Anweisungen den Computer ferner konfigurieren zum:
Identifizieren einer vorgegebenen Reihenfolge für eine Teilmenge der Vielzahl von Schritten (302a-302g); und
Durchsetzen der vorgegebenen Reihenfolge beim Erzeugen des Arbeitsablaufs (202); oder
wobei die Anweisungen den Computer ferner konfigurieren, um den Arbeitsablauf (202) auszuführen, wobei das Ausführen umfasst:
Identifizieren des ersten Benutzers, der den aktuellen Schritt durchgeführt hat;
Protokollieren des ersten Benutzers in einem Prüfprotokoll (134);
Erreichen des Übergangs;
Identifizieren des zweiten Benutzers, der für die Durchführung des zweiten Schritts verantwortlich ist;
Übergeben der Steuerung des Arbeitsablaufs (202) von dem ersten Benutzer an den zweiten Benutzer; und Protokollieren des zweiten Benutzers im Prüfprotokoll; optional
wobei der erste Benutzer und der zweite Benutzer jeweils Benutzerprofilen zugeordnet sind, und das Identifizieren des zweiten Benutzers Identifizieren in dem dem zweiten Benutzer zugeordneten Profil umfasst, dass der zweite Benutzer Zugriffsrechte für den zweiten Schritt hat.

10. Computerlesbares Speichermedium nach Anspruch 8, wobei:
eine erste Teilmenge der Vielzahl von Schritten (302a-302g) einer Verarbeitungsvorlage (412) zugeordnet ist, wobei die Verarbeitungsvorlage (412) eine oder mehrere anpassbare Seiten von Visualisierungen für jeden Schritt (302a-302g) definiert; und
eine zweite Teilmenge der Vielzahl von Schritten (302a-302g) einer Überprüfungsvorlage (426) zugeordnet ist, wobei die Überprüfungsvorlage (426) eine oder mehrere Aktionen spezifiziert, die von einem Prüfer von Daten durchzuführen sind, die von der ersten Teilmenge der Vielzahl von Schritten (302a-302g) erzeugt werden; oder
wobei mindestens eine der Seiten einem Visualisierungselement zugeordnet ist, das konfiguriert ist, um Daten anzuzeigen, die einem Schritt entsprechen, der der Seite auf einer Bedienerschnittstelle entspricht, und wobei die Anweisungen den Computer ferner konfigurieren, um eine Konfiguration für das Visualisierungselement zu empfangen, die steuert, wie das Visualisierungselement die Daten anzeigt; optional
wobei das Empfangen der Konfiguration umfasst:
Identifizieren einer Vielzahl von vorgegebenen Anzeigeformaten, die der Seite zugeordnet sind; und Erhalten einer Auswahl eines der vorgegebenen Anzeigeformate.

11. Computerlesbares Speichermedium nach Anspruch 14, wobei die Anweisungen den Computer ferner konfigurieren, um den Arbeitsablauf (202) auszuführen, wobei das Ausführen umfasst:
Empfangen, in einem ersten Schritt der Vielzahl von Schritten (302a-302g), eines Stroms von Rohdaten, die während des Chromatographieexperiments erfasst wurden, wobei der Strom von Rohdaten in einem Rohdatenspeicher (124) gespeichert ist;
Erzeugen, in dem ersten Schritt, von Metadaten, die aus der Verarbeitung der Rohdaten abgeleitet werden; und
Speichern der Metadaten in einem Metadatenkatalog (130), der von dem Strom der Rohdaten getrennt ist, wobei der Metadatenkatalog (130) in einem Dokumentenspeicher (128) gespeichert wird, der von dem Rohdatenspeicher (124) getrennt ist; oder
wobei die Anweisungen den Computer ferner konfigurieren, um den Arbeitsablauf (202) auszuführen, wobei das Ausführen umfasst:
Empfangen einer Anweisung, sich von einem der Vielzahl von Schritten (302a-302g) zu einem anderen der Vielzahl von Schritten (302a-302g) in dem Arbeitsablauf (202) zu bewegen;
Protokollieren der Bewegung in einem Prüfprotokoll (134); optional
wobei der andere der Vielzahl von Schritten (302a-302g) dem einen der Vielzahl von Schritten (302a-302g) in dem Arbeitsablauf (202) vorangeht, und wobei die Anweisungen den Computer ferner konfigurieren, um:
einen Benutzer, der die Bewegung eingeleitet hat, dazu aufzufordern, einen Grund für die Rückkehr zu dem anderen der Vielzahl von Schritten (302a-302g) einzugeben; und
den Grund im Prüfprotokoll zu protokollieren (134); oder
wobei der Benutzer eine Änderung an einer Einstellung bei dem anderen der Vielzahl von Schritten (302a-302g) vornimmt, und wobei die Anweisungen den Computer ferner konfigurieren, um:
den Benutzer, der die Bewegung initiiert hat, dazu aufzufordern, einen Grund für die Änderung der Einstellung einzugeben; und
den Grund in das Prüfprotokoll (134) einzutragen.

12. Rechnervorrichtung, umfassend:
einen Prozessor; und
einen Speicher, in dem Anweisungen gespeichert sind, die bei Ausführung durch den Prozessor die Vorrichtung konfigurieren, um:
eine Anweisung zu empfangen, einen Arbeitsablauf (202) zum Analysieren von Ergebnissen eines Chromatographieexperiments zu erzeugen, wobei:
der Arbeitsablauf (202) eine Vielzahl von Schritten (302a-302g) umfasst,
jeder Schritt (302a-302g) einer oder mehreren Seiten (306a-306g) zugeordnet ist, und
jede Seite eine Variation des Schritts darstellt;
eine Auswahl eines zu bearbeitenden Schritts über eine Bedienerschnittstelle zu empfangen;
eine Auswahl einer Seite für den ausgewählten Schritt über die Bedienerschnittstelle zu empfangen;
den Arbeitsablauf (202) zu konfigurieren, um die ausgewählte Seite einzuschließen; und
einen Übergang (304a-304c) zu dem Arbeitsablauf (202) hinzuzufügen, wobei der Übergang eine Änderung der Datenverwahrung von einem aktuellen Schritt der Vielzahl von Schritten (302a-302g) zu einem nächsten Schritt der Vielzahl von Schritten (302a-302g) darstellt, wobei der aktuelle Schritt konfiguriert ist, um von einem ersten Benutzer durchgeführt zu werden, und der nächste Schritt konfiguriert ist, um von einem zweiten Benutzer durchgeführt zu werden, der sich von dem ersten Benutzer unterscheidet.

13. Rechnervorrichtung nach Anspruch 12, wobei die Schritte (302a-302g) durch eine Datenstruktur definiert sind, und der Übergang durch dieselbe Datenstruktur definiert ist, um eine bestimmte Art von Schritt (302a-302g) zu sein; oder
wobei die Schritte (302a-302g) in einer oder mehreren Sequenzen organisiert sind, und jede Sequenz mit einem Übergang (304a-304c) zu einer nächsten Sequenz in dem Arbeitsablauf (202), zu einer vorherigen Sequenz des Arbeitsablaufs (202) oder zu einem Ende des Arbeitsablaufs (202) konfiguriert ist; oder
wobei die Anweisungen ferner die Vorrichtung konfigurieren zum:
Identifizieren einer vorgegebenen Reihenfolge für eine Teilmenge der Vielzahl von Schritten (302a-302g); und
Durchsetzen der vorgegebenen Reihenfolge beim Erzeugen des Arbeitsablaufs (202); oder
wobei die Anweisungen die Vorrichtung ferner konfigurieren, um den Arbeitsablauf (202) auszuführen, wobei das Ausführen umfasst:
Identifizieren des ersten Benutzers, der den aktuellen Schritt durchgeführt hat;
Protokollieren des ersten Benutzers in einem Prüfprotokoll (134);
Erreichen des Übergangs;
Identifizieren des zweiten Benutzers, der für die Durchführung des zweiten Schritts verantwortlich ist;
Übergeben der Steuerung des Arbeitsablaufs (202) von dem ersten Benutzer an den zweiten Benutzer; und Protokollieren des zweiten Benutzers im Prüfprotokoll (134); optional
wobei der erste Benutzer und der zweite Benutzer jeweils Benutzerprofilen zugeordnet sind, und das Identifizieren des zweiten Benutzers Identifizieren in dem dem zweiten Benutzer zugeordneten Profil umfasst, dass der zweite Benutzer Zugriffsrechte für den zweiten Schritt hat.

14. Rechnervorrichtung nach Anspruch 12, wobei:
eine erste Teilmenge der Vielzahl von Schritten (302a-302g) einer Verarbeitungsvorlage (412) zugeordnet ist, wobei die Verarbeitungsvorlage (412) eine oder mehrere anpassbare Seiten von Visualisierungen für jeden Schritt (302a-302g) definiert; und
eine zweite Teilmenge der Vielzahl von Schritten (302a-302g) einer Überprüfungsvorlage (426) zugeordnet ist, wobei die Überprüfungsvorlage (426) eine oder mehrere Aktionen spezifiziert, die von einem Prüfer von Daten durchzuführen sind, die von der ersten Teilmenge der Vielzahl von Schritten (302a-302g) erzeugt werden; oder
wobei mindestens eine der Seiten einem Visualisierungselement zugeordnet ist, das konfiguriert ist, um Daten anzuzeigen, die einem Schritt entsprechen, der der Seite auf einer Bedienerschnittstelle entspricht, und wobei die Anweisungen die Vorrichtung ferner konfigurieren, um eine Konfiguration für das Visualisierungselement zu empfangen, die steuert, wie das Visualisierungselement die Daten anzeigt; optional
wobei das Empfangen der Konfiguration umfasst:
Identifizieren einer Vielzahl von vorgegebenen Anzeigeformaten, die der Seite zugeordnet sind; und Erhalten einer Auswahl eines der vorgegebenen Anzeigeformate.

15. Rechnervorrichtung nach Anspruch 12, wobei die Anweisungen die Vorrichtung ferner konfigurieren, um den Arbeitsablauf (202) auszuführen, wobei das Ausführen umfasst:
Empfangen, in einem ersten Schritt der Vielzahl von Schritten (302a-302g), eines Stroms von Rohdaten, die während des Chromatographieexperiments erfasst wurden, wobei der Strom von Rohdaten in einem Rohdatenspeicher (124) gespeichert ist;
Erzeugen, in dem ersten Schritt, von Metadaten, die aus der Verarbeitung der Rohdaten abgeleitet werden; und
Speichern der Metadaten in einem Metadatenkatalog (130), der von dem Strom der Rohdaten getrennt ist, wobei der Metadatenkatalog (130) in einem Dokumentenspeicher (128) gespeichert wird, der von dem Rohdatenspeicher (124) getrennt ist; oder
wobei die Anweisungen die Vorrichtung ferner konfigurieren, um den Arbeitsablauf (202) auszuführen, wobei das Ausführen umfasst:
Empfangen einer Anweisung, sich von einem der Vielzahl von Schritten (302a-302g) zu einem anderen der Vielzahl von Schritten (302a-302g) in dem Arbeitsablauf (202) zu bewegen;
Protokollieren der Bewegung in einem Prüfprotokoll (134); optional
wobei der andere der Vielzahl von Schritten (302a-302g) dem einen der Vielzahl von Schritten (302a-302g) in dem Arbeitsablauf (202) vorangeht, und wobei die Anweisungen die Vorrichtung ferner konfigurieren, um:
einen Benutzer, der die Bewegung eingeleitet hat, dazu aufzufordern, einen Grund für die Rückkehr zu dem anderen der Vielzahl von Schritten (302a-302g) einzugeben; und
den Grund im Prüfprotokoll zu protokollieren (134); oder
wobei der Benutzer eine Änderung an einer Einstellung bei dem anderen der Vielzahl von Schritten (302a-302g) vornimmt, und wobei die Anweisungen die Vorrichtung ferner konfigurieren, um:
den Benutzer, der die Bewegung initiiert hat, dazu aufzufordern, einen Grund für die Änderung der Einstellung einzugeben; und
den Grund in das Prüfprotokoll (134) einzutragen.

## Revendications

1. Procédé mis en œuvre par ordinateur comprenant :
la réception d'une instruction pour générer un flux de travail (202) permettant d'analyser des résultats d'une expérience de chromatographie, dans lequel :
le flux de travail (202) comprend une pluralité d'étapes (302a à 302g),
chaque étape (302a- à 302g) est associée à une ou plusieurs pages (306a à 306g), et
chaque page représente une variation de l'étape ;
la réception d'une sélection, par l'intermédiaire d'une interface utilisateur, d'une étape à modifier ;
la réception d'une sélection, par l'intermédiaire de l'interface utilisateur, d'une page pour l'étape sélectionnée ;
la configuration du flux de travail (202) pour comporter la page sélectionnée ; et
l'ajout d'une transition (304a à 304c) au flux de travail (202), la transition représentant une modification de conservation de données depuis une étape actuelle de la pluralité d'étapes (302a à 302g) vers une étape suivante de la pluralité d'étapes (302a à 302g), dans lequel l'étape actuelle est configurée pour être réalisée par un premier utilisateur et l'étape suivante est configurée pour être réalisée par un second utilisateur différent du premier utilisateur.

2. Procédé selon la revendication 1, dans lequel les étapes (302a à 302g) sont définies par une structure de données, et la transition est définie par la même structure de données comme étant un type particulier d'étape (302a à 302g) ; ou
dans lequel les étapes (302a à 302g) sont organisées en une ou plusieurs séquences, et chaque séquence est configurée avec une transition (304a à 304c) vers une séquence suivante dans le flux de travail (202), vers une séquence précédente du flux de travail (202), ou vers une fin du flux de travail (202) ; ou
comprenant en outre :
l'identification d'un ordre prédéfini pour un sous-ensemble de la pluralité d'étapes (302a à 302g) ; et
l'application de l'ordre prédéfini lors de la génération du flux de travail (202).

3. Procédé selon la revendication 1, comprenant en outre l'exécution du flux de travail (202), l'exécution comprenant :
l'identification du premier utilisateur qui a réalisé l'étape en cours ;
la journalisation du premier utilisateur dans un journal d'audit (134) ;
l'arrivée à la transition ;
l'identification du second utilisateur responsable de la réalisation de la seconde étape ;
le transfert de la commande du flux de travail (202) du premier utilisateur au deuxième utilisateur ; et
la journalisation du second utilisateur dans le journal d'audit (134) ; éventuellement
dans lequel le premier utilisateur et le second utilisateur sont chacun associés à des profils d'utilisateur, et l'identification du second utilisateur comprend l'identification, dans le profil associé au second utilisateur, du fait que le second utilisateur a des droits d'utilisation pour la seconde étape.

4. Procédé selon la revendication 1, dans lequel :
un premier sous-ensemble de la pluralité d'étapes (302a à 302g) est associé à un modèle de traitement (412), le modèle de traitement (412) définissant une ou plusieurs pages personnalisables de visualisations pour chaque étape (302a à 302g) ; et
un second sous-ensemble de la pluralité d'étapes (302a à 302g) est associé à un modèle d'examen (426), le modèle d'examen (426) spécifiant une ou plusieurs actions à entreprendre par un examinateur de données générées par le premier sous-ensemble de la pluralité d'étapes (302a à 302g).

5. Procédé selon la revendication 1, dans lequel au moins l'une des pages est associée à un élément de visualisation configuré pour afficher des données associées à une étape correspondant à la page sur une interface utilisateur, et comprenant en outre la réception d'une configuration pour l'élément de visualisation qui commande la manière dont l'élément de visualisation affiche les données ; éventuellement,
dans lequel la réception de la configuration comprend :
l'identification d'une pluralité de formats d'affichage prédéfinis associés à la page ; et la réception d'une sélection d'un des formats d'affichage prédéfinis.

6. Procédé selon la revendication 1, comprenant en outre l'exécution du flux de travail (202), l'exécution comprenant :
la réception, à une première étape de la pluralité d'étapes (302a à 302g), d'un flux de données brutes acquises pendant l'expérience de chromatographie, le flux de données brutes étant stocké dans un magasin de données brutes (124) ;
la génération, à la première étape, de métadonnées dérivées du traitement des données brutes ; et
le stockage des métadonnées dans un catalogue de métadonnées (130) distinct du flux de données brutes, le catalogue de métadonnées (130) étant stocké dans un magasin de documents (128) distinct du magasin de données brutes (124).

7. Procédé selon la revendication 1, comprenant en outre l'exécution du flux de travail (202), l'exécution comprenant :
la réception d'une instruction pour basculer de l'une de la pluralité d'étapes (302a à 302g) à une autre de la pluralité d'étapes (302a à 302g) dans le flux de travail (202) ;
la journalisation du basculement dans un journal d'audit (134) ; éventuellement
dans lequel l'autre de la pluralité d'étapes (302a à 302g) précède l'une de la pluralité d'étapes (302a à 302g) dans le flux de travail (202), et comprenant en outre :
l'invitation à un utilisateur qui a initié le basculement à saisir un motif pour le retour à l'autre de la pluralité d'étapes (302a à 302g) ; et
la journalisation du motif dans le journal d'audit (134) ; ou
dans lequel l'utilisateur apporte une modification à un réglage à l'autre de la pluralité d'étapes (302a à 302g), et comprenant en outre :
l'invitation à l'utilisateur qui a initié le basculement à saisir un motif pour la modification du réglage ; et
la journalisation du motif dans le journal d'audit (134).

8. Support de stockage non transitoire lisible par un ordinateur, le support de stockage lisible par un ordinateur comportant des instructions qui lorsqu'elles sont exécutées par un ordinateur amènent l'ordinateur à :
recevoir une instruction pour générer un flux de travail (202) permettant d'analyser des résultats d'une expérience de chromatographie, dans lequel :
le flux de travail (202) comprend une pluralité d'étapes (302a à 302g),
chaque étape est associée à une ou plusieurs pages (306a à 306g), et
chaque page représente une variation de l'étape ;
recevoir une sélection, par l'intermédiaire d'une interface utilisateur, d'une étape à modifier ;
recevoir une sélection, par l'intermédiaire de l'interface utilisateur, d'une page pour l'étape sélectionnée ;
configurer le flux de travail (202) pour comporter la page sélectionnée ; et
ajouter une transition (304a à 304c) au flux de travail (202), la transition représentant une modification de conservation de données depuis une étape actuelle de la pluralité d'étapes (302a à 302g) vers une étape suivante de la pluralité d'étapes (302a à 302g), dans lequel l'étape actuelle est configurée pour être réalisée par un premier utilisateur et l'étape suivante est configurée pour être réalisée par un second utilisateur différent du premier utilisateur.

9. Support de stockage lisible par un ordinateur selon la revendication 8, dans lequel les étapes (302a à 302g) sont définies par une structure de données, et la transition est définie par la même structure de données comme étant un type particulier d'étape (302a à 302g) ; ou
dans lequel les étapes (302a à 302g) sont organisées en une ou plusieurs séquences, et chaque séquence est configurée avec une transition (304a à 304c) vers une séquence suivante dans le flux de travail (202), vers une séquence précédente du flux de travail (202), ou vers une fin du flux de travail (202) ; ou
dans lequel les instructions configurent en outre l'ordinateur pour :
identifier un ordre prédéfini pour un sous-ensemble de la pluralité d'étapes (302a à 302g) ; et
appliquer l'ordre prédéfini lors de la génération du flux de travail (202) ; ou
dans lequel les instructions configurent en outre l'ordinateur pour exécuter le flux de travail (202), l'exécution comprenant :
identifier le premier utilisateur qui a réalisé l'étape en cours ;
journaliser le premier utilisateur dans un journal d'audit (134) ;
arriver à la transition ;
identifier le second utilisateur responsable de la réalisation de la seconde étape ;
transférer la commande du flux de travail (202) du premier utilisateur au deuxième utilisateur ; et journaliser le second utilisateur dans le journal d'audit ; éventuellement
dans lequel le premier utilisateur et le second utilisateur sont chacun associés à des profils d'utilisateur, et identifier le second utilisateur comprend l'identification, dans le profil associé au second utilisateur, du fait que le second utilisateur a des droits d'utilisation pour la seconde étape.

10. Support de stockage lisible par ordinateur selon la revendication 8, dans lequel :
un premier sous-ensemble de la pluralité d'étapes (302a à 302g) est associé à un modèle de traitement (412), le modèle de traitement (412) définit une ou plusieurs pages personnalisables de visualisations pour chaque étape (302a à 302g) ; et
un second sous-ensemble de la pluralité d'étapes (302a à 302g) est associé à un modèle d'examen (426), le modèle d'examen (426) spécifie une ou plusieurs actions à entreprendre par un examinateur de données générées par le premier sous-ensemble de la pluralité d'étapes (302a à 302g) ; ou
dans lequel au moins l'une des pages est associée à un élément de visualisation configuré pour afficher des données associées à une étape correspondant à la page sur une interface utilisateur, et dans lequel les instructions configurent en outre l'ordinateur pour recevoir une configuration pour l'élément de visualisation qui commande la manière dont l'élément de visualisation affiche les données ; éventuellement
dans lequel la réception de la configuration comprend :
identifier une pluralité de formats d'affichage prédéfinis associés à la page ; et recevoir une sélection de l'un des formats d'affichage prédéfinis.

11. Support de stockage lisible par un ordinateur selon la revendication 14, dans lequel les instructions configurent en outre l'ordinateur pour exécuter le flux de travail (202), l'exécution comprenant :
recevoir, à une première étape de la pluralité d'étapes (302a à 302g), d'un flux de données brutes acquises pendant l'expérience de chromatographie, le flux de données brutes étant stocké dans un magasin de données brutes (124) ;
générer, à la première étape, des métadonnées dérivées du traitement des données brutes ; et
stocker des métadonnées dans un catalogue de métadonnées (130) distinct du flux de données brutes, le catalogue de métadonnées (130) étant stocké dans un magasin de documents (128) distinct du magasin de données brutes (124) ; ou
dans lequel les instructions configurent en outre l'ordinateur pour exécuter le flux de travail (202), l'exécution comprenant :
recevoir une instruction pour basculer de l'une de la pluralité d'étapes (302a à 302g) à une autre de la pluralité d'étapes (302a à 302g) dans le flux de travail (202) ;
journaliser le basculement dans un journal d'audit (134) ; éventuellement
dans lequel l'autre de la pluralité d'étapes (302a à 302g) précède l'une de la pluralité d'étapes (302a à 302g) dans le flux de travail (202), et dans lequel les instructions configurent en outre l'ordinateur pour :
inviter un utilisateur qui a initié le basculement à saisir un motif pour le retour à l'autre de la pluralité d'étapes (302a à 302g) ; et
journaliser le motif dans le journal d'audit (134) ; ou
dans lequel l'utilisateur apporte une modification d'un réglage à l'autre de la pluralité d'étapes (302a à 302g), et dans lequel les instructions configurent en outre l'ordinateur pour :
inviter l'utilisateur qui a initié le basculement à saisir un motif pour la modification du réglage ; et
journaliser le motif dans le journal d'audit (134).

12. Appareil informatique comprenant :
un processeur ; et
une mémoire stockant des instructions qui, lorsqu'elles sont exécutées par le processeur, configurent l'appareil pour :
recevoir une instruction pour générer un flux de travail (202) permettant d'analyser des résultats d'une expérience de chromatographie, dans lequel :
le flux de travail (202) comprend une pluralité d'étapes (302a à 302g),
chaque étape (302a- à 302g) est associée à une ou plusieurs pages (306a à 306g), et
chaque page représente une variation de l'étape ;
recevoir une sélection, par l'intermédiaire d'une interface utilisateur, d'une étape à modifier ;
recevoir une sélection, par l'intermédiaire de l'interface utilisateur, d'une page pour l'étape sélectionnée ;
configurer le flux de travail (202) pour comporter la page sélectionnée ; et
ajouter une transition (304a à 304c) au flux de travail (202), la transition représentant une modification de conservation de données depuis une étape actuelle de la pluralité d'étapes (302a à 302g) vers une étape suivante de la pluralité d'étapes (302a à 302g), dans lequel l'étape actuelle est configurée pour être réalisée par un premier utilisateur et l'étape suivante est configurée pour être réalisée par un second utilisateur différent du premier utilisateur.

13. Appareil informatique selon la revendication 12, dans lequel les étapes (302a à 302g) sont définies par une structure de données, et la transition est définie par la même structure de données comme étant un type particulier d'étape (302a à 302g) ; ou
dans lequel les étapes (302a à 302g) sont organisées en une ou plusieurs séquences, et chaque séquence est configurée avec une transition (304a à 304c) vers une séquence suivante dans le flux de travail (202), vers une séquence précédente du flux de travail (202), ou vers une fin du flux de travail (202) ; ou
dans lequel les instructions configurent en outre l'appareil pour :
identifier un ordre prédéfini pour un sous-ensemble de la pluralité d'étapes (302a à 302g) ; et
appliquer l'ordre prédéfini lors de la génération du flux de travail (202) ; ou
dans lequel les instructions configurent en outre l'appareil pour exécuter le flux de travail (202), l'exécution comprenant :
identifier le premier utilisateur qui a réalisé l'étape en cours ;
journaliser le premier utilisateur dans un journal d'audit (134) ;
arriver à la transition ;
identifier le second utilisateur responsable de la réalisation de la seconde étape ;
transférer la commande du flux de travail (202) du premier utilisateur au deuxième utilisateur ; et journaliser le second utilisateur dans le journal d'audit (134) ; éventuellement
dans lequel le premier utilisateur et le second utilisateur sont chacun associés à des profils d'utilisateur, et identifier le second utilisateur comprend l'identification, dans le profil associé au second utilisateur, du fait que le second utilisateur a des droits d'utilisation pour la seconde étape.

14. Appareil informatique selon la revendication 12, dans lequel :
un premier sous-ensemble de la pluralité d'étapes (302a à 302g) est associé à un modèle de traitement (412), le modèle de traitement (412) définit une ou plusieurs pages personnalisables de visualisations pour chaque étape (302a à 302g) ; et
un second sous-ensemble de la pluralité d'étapes (302a à 302g) est associé à un modèle d'examen (426), le modèle d'examen (426) spécifie une ou plusieurs actions à entreprendre par un examinateur de données générées par le premier sous-ensemble de la pluralité d'étapes (302a à 302g) ; ou
dans lequel au moins l'une des pages est associée à un élément de visualisation configuré pour afficher des données associées à une étape correspondant à la page sur une interface utilisateur, et dans lequel les instructions configurent en outre l'appareil pour recevoir une configuration pour l'élément de visualisation qui commande la manière dont l'élément de visualisation affiche les données ; éventuellement
dans lequel la réception de la configuration comprend :
identifier une pluralité de formats d'affichage prédéfinis associés à la page ; et recevoir une sélection de l'un des formats d'affichage prédéfinis.

15. Appareil informatique selon la revendication 12, dans lequel les instructions configurent en outre l'appareil pour exécuter le flux de travail (202), l'exécution comprenant :
recevoir, à une première étape de la pluralité d'étapes (302a à 302g), d'un flux de données brutes acquises pendant l'expérience de chromatographie, le flux de données brutes étant stocké dans un magasin de données brutes (124) ;
générer, à la première étape, des métadonnées dérivées du traitement des données brutes ; et
stocker des métadonnées dans un catalogue de métadonnées (130) distinct du flux de données brutes, le catalogue de métadonnées (130) étant stocké dans un magasin de documents (128) distinct du magasin de données brutes (124) ; ou
dans lequel les instructions configurent en outre l'appareil pour exécuter le flux de travail (202), l'exécution comprenant :
recevoir une instruction pour basculer de l'une de la pluralité d'étapes (302a à 302g) à une autre de la pluralité d'étapes (302a à 302g) dans le flux de travail (202) ;
journaliser le basculement dans un journal d'audit (134) ; éventuellement
dans lequel l'autre de la pluralité d'étapes (302a à 302g) précède l'une de la pluralité d'étapes (302a à 302g) dans le flux de travail (202), et dans lequel les instructions configurent en outre l'appareil pour :
inviter un utilisateur qui a initié le basculement à saisir un motif pour le retour à l'autre de la pluralité d'étapes (302a à 302g) ; et
journaliser le motif dans le journal d'audit (134) ; ou
dans lequel l'utilisateur apporte une modification d'un réglage à l'autre de la pluralité d'étapes (302a à 302g), et dans lequel les instructions configurent en outre l'appareil pour :
inviter l'utilisateur qui a initié le basculement à saisir un motif pour la modification du réglage ; et
journaliser le motif dans le journal d'audit (134).
